# EUROPÄISCHE PATENTANMELDUNG

(11) **EP 4 607 723 A1**
(43) Veröffentlichungstag der Anmeldung: **27.08.2025**
(21) Anmeldenummer: 24173975.4
(22) Anmeldetag: 03.05.2024
(51) Int. Cl.: H02G 1/04

(54) **ROLLENBLOCK MIT SEILLAUFROLLENPAAREN UND SCHWENKBAREN ROLLENACHSEN**

(30) Priorität: 26.02.2024 EP 24159657
(71) Anmelder: Omexom Hochspannung GmbH, 29664 Walsrode (DE)
(72) Erfinder: Erspamer, Michael, 39042 Brixen (IT)
(74) Vertreter: ETL IP Patent- und Rechtsanwaltsgesellschaft mbH

(57) **Zusammenfassung**

Die Erfindung betrifft einen Rollenblock (1) mit zwei Rollachsen (6, 7). Um die Handhabung des Rollenblocks (1) einfacher zu gestalten, sind die Rollachsen (6, 7) relativ zueinander schwenkbar.

## Beschreibung

### Technisches Gebiet

Die Erfindung betrifft Rollenblöcke zur Verwendung im Freileitungsbau. Rollenblöcke werden für die Installation eines Sicherungssystems (im Folgenden Rollenleinensystem) zum Schutz von Kreuzungsobjekten bei der Montage oder beim Austausch von Leiterseilen verwendet. Ein Leiterseil kann auch als Leitung oder Freileitung oder als Hochspannungsfreileitung bezeichnet sein.

Insbesondere betrifft die Erfindung einen Rollenblock, mit einer ersten Rollachse und einer von der ersten Rollachse beabstandet angeordneten zweiten Rollachse. Der Rollenblock weist entlang zumindest einer der ersten und der zweiten Rollenachsen ein erstes Ende und ein dem ersten Ende entlang zumindest einer der ersten und der zweiten Rollenachsen gegenüberliegendes zweites Ende auf. Der Rollenblock weist ein erstes Paar von Seillaufrollen und ein zweites Paar von Seillaufrollen auf. Das erste Paar weist zwei einander gegenüberliegend anordenbare Seillaufrollen auf und das zweite Paar weist zwei weitere einander gegenüberliegend anordenbare Seillaufrollen auf. Eine erste Seillaufrolle des ersten Paares ist auf der ersten Rollachse angeordnet. Eine zweite Seillaufrolle des ersten Paares ist auf der zweiten Rollachse angeordnet. Eine erste Seillaufrolle des zweiten Paares ist auf der ersten Rollachse angeordnet. Eine zweite Seillaufrolle des zweiten Paares ist auf der zweiten Rollachse angeordnet.

### Technologischer Hintergrund

Der Austausch von Freileitungen ist in mehrfacher Hinsicht ein bedeutendes Unterfangen, aber besonders im Zusammenhang mit Hochspannungsfreileitungen, da die unter diesen Leitungen liegende oder kreuzende Infrastruktur (z.B. Autobahn, Eisenbahn, Straßen, Gebäude usw.) durch unzulässige Annäherung oder Havarien (Leiterseilriss) beeinträchtigt oder sogar beschädigt werden könnte und damit verbundene Gesundheits- und Sicherheitsrisiken bestehen.

Für die Montage und den Austausch von Leiterseilen sind Seilzugsicherungssysteme bekannt, die die Montage oder den Austausch von jeweils einem Leiterseil ermöglichen. Dabei wird mit einem Roboter (im Folgenden Seillaufkatze genannt), der auf dem Leiterseil entlang fährt, das Rollenleinensystem installiert, indem der Roboter ein Tragseil (im Folgenden auch Rollenleinenseil genannt) einzieht, an dem in vordefinierten Abständen die Rollenblöcke befestigt sind. Diese Rollenblöcke sind auch mit dem Leiterseil verbunden. Im Endzustand ist für jedes Leiterseil im gesamten Spannfeld zwischen zwei Freileitungsmasten ein abgespanntes Rollenleinenseil installiert. Das Leiterseil liegt in den Rollen der Rollenblöcke. Das Rollenleinensystem, welches das Rollenleinenseil und mehrere Rollenblöcke aufweisen kann, kann die Last des vorhandenen Leiterseils aufnehmen. Das Leiterseil wird nun getauscht, indem das vorhandene Leiterseil mit einem neuen Leiterseil verbunden (beispielswiese über Ziehstrümpfe und Wirbelverbinder) und durch die Rollenblöcke gezogen wird. Das Rollenleinensystem sorgt dafür, dass das Leiterseil den Sicherheitsabstand zum Kreuzungsobjekt nicht unterschreitet und im Havariefall (Seilriss) nicht auf das Kreuzungsobjekt fällt, sondern im Tragsystem aufgefangen wird.

Es ist ein Rollenleinensystem bekannt, bei denen zwei Rollenblöcke mithilfe eines Verbindungselementes zusammengesteckt werden können, um gleichzeitig zwei Leiterseile führen zu können. Die bekannten Rollenblöcke sind also mehrteilig ausgebildet und vor Ort, also von Hängeleitern aus, die am Mast selbst aufgehängt sind, oder vergleichbaren Zwangslagen, auf den Leiterseilen zusammenzusetzen, was umständlich ist.

### Darstellung der Erfindung

Es ist eine Aufgabe der Erfindung, einen einfacher einsetzbaren Rollenblock für eine Mehrfachaufnahme von Leiterseilen (auch Bündel genannt) bereitzustellen.

Diese Aufgabe wird für den eingangs genannten Rollenblock dadurch gelöst, dass der Rollenblock eine Verbindungsvorrichtung aufweist, wobei die Verbindungsvorrichtung die erste Rollenachse und die zweite Rollenachse unverlierbar miteinander und relativ zueinander schwenkbar verbindet.

Durch die Schwenkbarkeit der Rollenachsen kann der Rollenblock als Ganzes auf die Leiterseile aufgesetzt werden, ohne das einzelne Elemente des Rollenblocks separat zusammengesetzt werden müssen. Sitzt der Rollenblock auf den Leiterseilen, kann dieser schlicht zusammengeklappt werden, um das Anbringen des Rollenblocks an den Leiterseilen abzuschließen. Eine den Rollenblock an den Leiterseilen anbringende Person muss also nicht Einzelteile des Rollenblocks bei der Montage auf den Leiterseilen zusammensetzen.

Die Lösung kann durch verschiedene, jeweils für sich vorteilhafte und, sofern nicht anders ausgeführt, beliebig miteinander kombinierbare Ausgestaltungen weiter verbessert werden. Auf diese Ausführungsformen und die mit ihnen verbundenen Vorteile ist im Folgenden eingegangen.

Gemäß einer ersten Ausführungsform weist der Rollenblock eine Schwenkachse auf, die näher an einer der ersten und zweiten Rollachsen angeordnet ist als an der anderen der ersten und zweiten Rollachsen.

Ein Vorteil dieser Ausführungsform kann sein, dass durch die unterschiedlichen Abstände der Rollenachsen von der Schwenkachse die Montage des Rollenblocks auf den Leiterseilen vereinfacht sein kann. So können beispielsweise die Seilrollen, die auf der näher zur Schwenkachse gelegenen Rollachse angeordnet sind, auf die Leiterseile gelegt werden. Die andere Rollachse kann dann nach oben geschwenkt werden, bis Seilrollen, die auf der weiter von der Schwenkachse entfernt angeordneten Rollachse mit den auf der näher zur Schwenkachse gelegenen Rollachse angeordneten Seilrollen Rollenpaare bilden. Beispielswiese können die Rollachsen parallel zueinander ausgerichtet sein, wenn die Seilrollen Rollenpaare bilden. Wegen des längeren Abstandes kann der zum Schwenken der weiter entfernt von der Schwenkachse angeordneten Rollachse zu überwindende Winkel geringer sein.

Gemäß einer weiteren Ausführungsform ist die Verbindungsvorrichtung scharnierförmig mit zwei Flügeln ausgebildet, wobei die Schwenkachse die Flügel miteinander verbindet. Die erste Rollachse kann an einem ersten der Flügel angebracht sein. Die zweite Rollachse kann an einem zweiten der Flügel angebracht sein.

Ein Vorteil dieser Ausführungsform kann sein, dass scharnierförmige Verbindungsvorrichtungen mechanisch einfach und mit relativ geringem Gewicht herstellbar sowie in der Handhabung einfach sind.

Gemäß einer weiteren Ausführungsform ist einer der beiden Flügel kürzer als der andere der beiden Flügel.

Ein Vorteil dieser Ausführungsform kann sein, dass die unterschiedlichen Abstände der Rollachsen zu der Schwenkachse konstruktiv einfach und daher robust und mit geringem Gewicht bereitgestellt werden.

Gemäß einer weiteren Ausführungsform weist der kürzere der beiden Flügel eine erste Anbringaufnahme auf. Der längere der beiden Flügel kann eine zweite Anbringaufnahme und ein Verbindungseinrichtung aufweisen. Die erste Rollachse oder die zweite Rollachse kann an der ersten Anbringaufnahme angebracht sein. Die andere Rollachse kann an der zweiten Anbringaufnahme angebracht sein.

Ein Vorteil dieser Ausführungsform kann sein, dass die Flügel einfach und womöglich sogar modular mit unterschiedlichen Längen aufbaubar sein können.

Gemäß einer weiteren Ausführungsform weist zumindest eine der Anbringaufnahmen einen Anbringring, in das eine der Rollachsen hineinragt, auf. Die zumindest eine der Anbringaufnahmen kann einen vom Anbringring weg vorspringenden Befestigungsvorsprung aufweisen. Ferner kann zumindest eine der Anbringaufnahmen ein Montageelement zur Montage eines Sicherungselementes aufweisen. Das Montageelement kann am Anbringring und insbesondere an dessen Mantel- oder Außenseite angeordnet sein. Das Montageelement kann an einer vom Befestigungsvorsprung weg weisenden Seite des Anbringrings angeordnet sein. Das Montageelement kann ein Durchgangsloch aufweisen, in das das Sicherungselement zumindest teilweise einsetzbar ist. Das Sicherungselement ist beispielsweise ein Schäkel oder ein Karabinerhaken.

Ein Vorteil dieser Ausführungsform kann sein, dass die jeweilige Rollachse einfach an der Anbringaufnahme anbringbar ist, etwa indem die Rollachse im Anbringring verpresst oder dort angeordnet verschweißt, verklebt oder anderweitig befestigt ist, sodass die Befestigung der Rollachse an der Verbindungsvorrichtung wenig Platz benötigt. Der Befestigungsvorsprung kann eine Verbindung zwischen den Anbringaufnahmen vereinfachen, ohne dass hierdurch die Befestigung der Rollachse am Anbringring beeinträchtigt wird.

Gemäß einer weiteren Ausführungsform sind einander gegenüberliegende Seiten des Befestigungsvorsprungs zwischen zwei Verbindungselementen der Verbindungseinrichtung angeordnet. Dieser Befestigungsvorsprung kann ein Teil des längeren Flügels sein. Die Verbindungselemente können einfach herzustellende und leicht zu montierende Platten, insbesondere Metallplatten sein. Der Befestigungsvorsprung kann mit den Verbindungselementen verschweißt, verklebt, verschraubt oder anderweitig befestigt sein. Beispielswiese kann der Befestigungsvorsprung an jeder seiner einander gegenüberliegenden Seiten an zwei Befestigungspunkten mit einem der Verbindungselemente verbunden sein, wobei die zwei Befestigungspunkte aus Sicht der Schwenkachse hintereinander angeordnet sein können, sodass der längere Flügel starr ausgebildet sein kann. Die beiden Befestigungspunkte können Schweiß- oder Klebepunkte sein. Durch die beiden Befestigungspunkte jeder einander gegenüberliegenden Seite und durch die Verbindungselemente können sich Schrauben erstrecken. Der Befestigungsvorsprung kann zwischen zwei Verbindungselementen verpresst sein.

Ein Vorteil dieser Ausführungsform kann sein, dass, dass die Verbindungsvorrichtung einfach und mit geringem Gewicht aufgebaut sein und die unterschiedlichen Abstände zwischen den Rollenachsen und der Schwenkachse bereitstellen kann.

Gemäß einer weiteren Ausführungsform erstreckt sich die Schwenkachse durch die Verbindungseinrichtung und den Befestigungsvorsprung.

Ein Vorteil dieser Ausführungsform kann sein, dass die Schwenkachse als integraler Bestandteil der Verbindungsvorrichtung und daher mit wenigen Teilen und geringem Gewicht bereitgestellt ist.

Gemäß einer weiteren Ausführungsform weist der Rollenblock entlang der ersten Rollachse und/oder der zweiten Rollachse ein erstes Ende auf, wobei die Verbindungsvorrichtung am ersten Ende angeordnet ist.

Ein Vorteil dieser Ausführungsform kann sein, dass die Anordnung der Verbindungsvorrichtung beziehungsweise der Schwenkachse an dem ersten Ende dazu führt, dass der Rollenblock weit aufklappbar sein kann, wodurch sich die Montage des Rollenblocks auf den Leiterseilen vereinfacht.

Gemäß einer weiteren Ausführungsform weist der Rollenblock entlang der ersten Rollachse und/oder der zweiten Rollenachse ein dem ersten Ende gegenüberliegendes zweites Ende auf. Am zweiten Ende kann der Rollenblock mit einer auch wiederholt öffenbaren und verschließbaren Verschlussvorrichtung versehen sein. Die Verschlussvorrichtung kann in ihrem verschlossenen Zustand ein Schwenken der ersten und zweiten Rollachsen relativ zueinander verhindern. Im geöffneten Zustand der Verschlussvorrichtung kann die Verschlussvorrichtung ein Schwenken der ersten und zweiten Rollachsen relativ zueinander freigeben. Die Verschlussvorrichtung kann einen Schnappverschluss aufweisen, der durch das Zusammenklappen der Schwenkachsen in deren parallele Position zueinander selbsttätig schließt.

Ein Vorteil dieser Ausführungsform kann sein, dass der Rollenblock einfach unverlierbar an den Leiterseilen anbringbar ist. Ferner kann die Anbringung der Verschlussvorrichtung beabstandet zur Verbindungseinrichtung die Handhabung erleichtern.

Gemäß einer weiteren Ausführungsform ist zumindest eine der ersten Seilrollen auf der ersten Rollachse verschiebbar angeordnet. Alternativ oder zusätzlich kann zumindest eine der zweiten Seilrollen auf der zweiten Rollachse verschiebbar angeordnet sein. Jede der Seilrollen kann verschiebbar auf der jeweiligen Rollachse angeordnet sein. Eine Position der jeweiligen Seilrolle auf der Rollachse kann mithilfe eines Positionierelementes, etwa eine Schraube oder ein Sprengring, gegen ungewollte Verschiebung sicherbar sein. Das Positionierelement kann auch wiederholt anbringbar an und entfernbaren von der jeweiligen Rollachse ausgebildet sein.

Ein Vorteil dieser Ausführungsform kann sein, dass der Rollenblock einfach an die Position der durch den Rollenblock aufzunehmenden Leiterseile anpassbar ist.

Gemäß einer weiteren Ausführungsform weist der Rollenblock eine Befestigungsvorrichtung zur bewegungsübertragenden Befestigung des Rollenblocks an einem Tragseil auf. Die Befestigungsvorrichtung kann an einer der Rollachsen angebracht sein. Insbesondere kann die Befestigungsvorrichtung an der Rollachse angebracht sein, die näher zu der Schwenkachse als die andere Rollachse angeordnet ist.

Ein Vorteil dieser Ausführungsform kann sein, dass die Befestigungsvorrichtung Platz sparend angebracht sein kann. Wenn die Befestigungsvorrichtung an der Rollachse angebracht ist, die näher zu der Schwenkachse als die andere Rollachse angeordnet ist, und die auf dieser Rollachse geführten Seilrollen im Einsatz auf den Leiterseilen aufliegen, kann die Befestigungsvorrichtung von der Rollachse herabhängen, sodass diese ein Tragseil parallel zu den Leiterseilen führt und einfach an diesem befestigbar ist.

Gemäß einer weiteren Ausführungsform weist der Rollenblock zwei Befestigungsvorrichtungen zur bewegungsübertragenden Befestigung des Rollenblocks an zwei Tragseilen auf. Die Befestigungsvorrichtungen können das erste und das zweite Paar Seilrollen flankieren. Flankieren kann in diesem Fall bedeuten, dass nur das erste und das zweite Paar Seilrollen zwischen den Befestigungsvorrichtungen angeordnet sind. Alternativ können mehrere und beispielsweise alle Paare Seilrollen des Rollenblocks zwischen den Befestigungsvorrichtungen angeordnet sein. Die Befestigungsvorrichtungen können jeweils zwischen dem Paar Seilrollen, dass am nächsten zu einem der Enden des Rollenblocks angeordnet ist, und dem jeweiligen Ende angeordnet sein.

Ein Vorteil dieser Ausführungsform kann sein, dass die Befestigungsvorrichtungen entlang einer der Rollachsen zueinander beabstandet und womöglich im Wesentlichen maximal zueinander beabstandet vorgesehen sein und mechanische Lasten effizient mit mehreren Tragseilen austauschen können.

Gemäß einer weiteren Ausführungsform ist eine erste der beiden Befestigungsvorrichtungen an der ersten Rollachse oder der zweiten Rollachse angebracht. Alternativ oder zusätzlich kann eine zweite der beiden Befestigungsvorrichtungen an der ersten Rollachse oder der zweiten Rollachse angebracht sein. Insbesondere können alle Befestigungsvorrichtungen an derselben Rollachse angebracht sein.

Ein Vorteil dieser Ausführungsform kann sein, dass die Befestigungsvorrichtungen einfach von einer Person lokalisierbar sind.

Gemäß einer weiteren Ausführungsform weist der Rollenblock ein drittes Paar von Seillaufrollen und optional ein viertes Paar von Seillaufrollen auf. Das dritte Paar kann zwei einander gegenüberliegend anordenbare Seillaufrollen aufweisen. Das vierte Paar kann zwei weitere einander gegenüberliegend anordenbare Seillaufrollen aufweisen. Eine erste Seillaufrolle des dritten Paares kann auf der ersten Rollachse angeordnet sein. Eine zweite Seillaufrolle des dritten Paares kann auf der zweiten Rollachse angeordnet sein. Eine erste Seillaufrolle des vierten Paares kann auf der ersten Rollachse angeordnet sein. Eine zweite Seillaufrolle des vierten Paares kann auf der zweiten Rollachse angeordnet sein.

Der Rollenblock kann drei Befestigungsvorrichtungen zur bewegungsübertragenden Befestigung des Rollenblocks an zwei Tragseilen aufweisen. Zwei der Befestigungsvorrichtungen können alle Paare flankieren. Die dritte der Befestigungsvorrichtungen kann zwischen zwei der Paare angeordnet sein.

Ein Vorteil dieser Ausführungsform kann sein, dass mehr als zwei Leiterseile geführt werden können, wobei bis zu drei Tragseile am Rollenblock anbringbar sind, wodurch nicht nur die Sicherheit verbessert wird, sondern der Rollenblock auch gleichmäßiger bewegt werden kann, was ein horizontales Verdrehen oder Verkippen verhindern oder zumindest vermindern kann.

Gemäß einer weiteren Ausführungsform weist der Rollenblock ein fünftes Paar von Seillaufrollen auf. Das fünfte Paar kann zwei einander gegenüberliegend anordenbare Seillaufrollen aufweisen. Eine erste Seillaufrolle des fünften Paares kann auf der ersten Rollachse angeordnet sein. Eine zweite Seillaufrolle des fünften Paares kann auf der zweiten Rollachse angeordnet sein. Die fünf Paare können zueinander gleich beabstandet sein.

Ein Vorteil dieser Ausführungsform kann sein, dass mit dem fünf Paare aufweisenden Rollenblock ein einzelnes Leiterseil oder mehrere Leiterseile, etwa zwei Leiterseile, drei Leiterseile, vier Leiterseile oder fünf Leiterseile, so den jeweiligen Paaren zugeordnet werden kann, dass der Rollenblock ohne zu verkanten über die Leiterseile geführt werden kann. Beispielsweise kann das einzelne Leiterseil über das mittlere Paar geführt werden. Zwei Leiterseile können auf zwei symmetrisch zu dem mittleren Paar angeordneten Paaren geführt werden. Drei Leiterseite können auf dem mittleren Paar und auf zwei symmetrisch zu dem mittleren Paar angeordneten Paaren geführt werden. Vier Leiterseile können auf den vier Paaren, die das mittlere Paar flankieren, geführt werden. Fünf Leiterseile können auf fünf Paaren geführt werden.

Gemäß einer weiteren Ausführungsform weist der Verschlussmechanismus einen Schubstangenspanner mit dem Hebel und einer Schubstange auf. Der Hebel kann bewegungsübertragend mit der Schubstange verbunden sein. Ein Schwenken des Hebels kann die Schubstange entlang ihrer Längsrichtung verschieben. Insbesondere kann die Längsrichtung der Schubstange senkrecht zu der ersten Rollachse und/oder der zweiten Rollachse verlaufen, beispielswiese im verschlossenen Zustand V. Alternativ könnte ein Schwenkstangenspanner, dessen Schwenkstange durch Betätigung des Bedienhebels in den verschlossenen Zustand schwenkbar ist, verwendet werden.

Gemäß einer weiteren Ausführungsform weist die Schubstange an ihrem freien Ende einen abnehmenden Durchmesser auf. Beispielsweise kann das freie Ende der Schubstange konisch und/oder spitz zulaufend ausgebildet sein.

Gemäß einer weiteren Ausführungsform weist die Verschlussvorrichtung eine weitere Anbringaufnahme mit einem Anbringring und einem Befestigungsvorsprung auf. Die weitere Anbringaufnahme kann an der ersten Rollachse angebracht sein.

Bei allen offenbarten Ausführungsformen kann der Anbringring eine von der Ringform abweichende Mantelfläche oder Außenfläche aufweisen. Beispielsweise können zumindest ausgewählte der Mantel- oder Außenflächen eben ausgeformt sein. Der Anbringring kann auch als Anbringelement bezeichnet werden.

Gemäß einer weiteren Ausführungsform weist der Befestigungsvorsprung ein Durchgangsloch auf, durch das sich die Schubstange im verschlossenen Zustand zumindest teilweise erstrecken kann. Alternativ kann der Befestigungsvorsprung einen sich parallel zur ersten Rollachse öffnenden Schlitz aufweisen, in den die Schwenkstange im verschlossenen Zustand hineingeschwenkt ist.

Gemäß einer weiteren Ausführungsform ist der Schubstangenspanner bewegungsübertragen mit der zweiten Rollachse verbunden. Insbesondere kann die Verschlussvorrichtung noch eine weitere Anbringaufnahme, die an der zweiten Rollachse angebracht ist und an der der Schubstangenspanner befestigt ist, aufweisen.

Die weitere Anbringaufnahme kann kein Anbringelement mit Befestigungsvorsprung aufweisen, sondern als ein Anbringblock ausgebildet sein. Der Anbringblock kann wie der Anbringring eine Öffnung aufweisen, in der ein Teil und beispielsweise ein Ende der zweiten Rollachse angeordnet ist. An einem von der Öffnung weg weisenden Ende kann der Anbringblock einen Schlitz aufweisen, der sich weg von der Öffnung und optional parallel zur zweiten Rollachse öffnen. Im verschlossenen Zustand kann der Anbringvorsprung im Schlitz angeordnet sein. Den Schlitz quer zur zweiten Rollachse begrenzende Seiten oder Flanken können quer zur zweiten Rollachse durch die Seiten oder Flanken verlaufende Öffnungen aufweisen. Wenigstens eine der Öffnungen kann eine Durchgangsöffnung sein. Eine der Öffnungen kann eine einseitig geschlossene Öffnung, also ein Sackloch, sein. Im verschlossenen Zustand kann sich die Schubstange durch die Öffnungen der beiden Flanken erstrecken.

Gemäß einer weiteren Ausführungsform ist die Verschlusseinrichtung ausgestaltet, die Schubstange im verschlossenen Zustand zu halten, um ein ungewolltes Öffnen der Verschlusseinrichtung zu vermeiden. Beispielsweise kann die Verschlusseinrichtung ein Blockierelement aufweisen. Eine zum freien Ende verlaufende Längsseite der Schubstange kann eine quer zu ihrer Längsrichtung verlaufende Nut aufweisen. In einem den verschlossenen Zustand sichernden Zustand kann das Blockierelement in die Nut eingreifen und so eine Bewegung der Schubstange zumindest aus dem verschlossenen Zustand heraus blockieren.

Gemäß einer weiteren Ausführungsform ist das Blockierelement eine Blockierplatte, die im Wesentlichen parallel zu einer durch die beiden Rollachsen aufgespannten Ebene angeordnet sein kann. Die Blockierplatte kann um eine Rotationsachse drehbar an der weiteren Anbringaufnahme angebracht sein. Die Drehachse kann quer zu der durch die beiden Rollachsen aufgespannten Ebene verlaufen und außermittig der Blockierplatte angeordnet sein. Die Blockierplatte kann also in den und aus dem sichernden Zustand geschwenkt werden.

Gemäß einer weiteren Ausführungsform weist die Blockierplatte an einem der Rotationsachse gegenüberliegenden Bereich, der näher an der Schubstange als an der Rotationsachse liegt, ein Langloch auf. Das Langloch kann so ausgebildet sein, dass die Blockierplatte im sichernden Zustand mit einem parallel zur Rotationsachse verlaufenden Stift verklemmt. In einem anderen als den sichernden Zustand kann die Blockierplatte frei um die Rotationsachse drehbar sein. Beispielsweise erstreckt sich die längere Achse des Langlochs im Wesentlichen parallel zur zweiten Rollachse.

Gemäß einer weiteren Ausführungsform weist die Verbindungsvorrichtung eine Schwenkbegrenzungseinrichtung auf, die ausgebildet ist, einen Winkel zwischen der ersten Rollachse und der zweiten Rollachse zu begrenzen. Insbesondere kann die Schwenkbegrenzungseinrichtung den maximalen Öffnungswinkel, bis zu dem der Rollenblock aufklappbar ist, vorgeben.

Gemäß einer weiteren Ausführungsform kann die Schwenkbegrenzungseinrichtung an einer vom Rollenblock weg weisenden Seite der Verbindungsvorrichtung angeordnet sein. Die Schwenkbegrenzungseinrichtung weist beispielsweise einen ersten Anschlag und einen zweiten Anschlag auf. Der erste Anschlag kann an dem Befestigungsvorsprung des ersten Flügels angeordnet sein. Der zweite Anschlag 43 kann an der der Anbringaufnahme oder dem Befestigungsvorsprung des zweiten Flügels angeordnet sein.

Zumindest einer der beiden Anschläge kann an seiner im aufgeschwenkten Zustand des Rollenblocks dem anderen der Anschläge zugewandten Seite ein elastisches Element aufweisen. Das elastische Element kann ein Aufeinandertreffen der beiden Anschläge zur Begrenzung des Öffnungswinkels dämpfen.

Beispielsweise ist die Schwenkbegrenzungseinrichtung ausgebildet, den Öffnungswinkel zwischen den Rollachsen auf weniger als 90 °, weniger als 70 °, weniger als 45 ° oder auf 30 ° zu beschränken. Ferner kann die Schwenkbegrenzungseinrichtung vermeiden, dass der längere der beiden Flügel beim Aufklappen des Rollenblocks ungewünscht weit auf schwenkt, sodass die Schwenkbegrenzungseinrichtung ein Schwenkmaß auf weniger als 200 mm, weniger als 150 mm oder weniger als 100 mm begrenzen kann. Ein Schwenkmaß kann ein parallel zur ersten Rollachse zu messender Abstand einer Position eines von der Schwenkachse weg weisenden Endes des zweiten Flügels im zusammengeklappten Zustand Z und einer Position dieses Endes im aufgeschwenkten Zustand sein.

Gemäß einer weiteren Ausführungsform weist die erste Rollachse und/oder die zweite Rollachse einen Durchmesser auf, der größer als 20 mm ist. Beispielsweise kann der Durchmesser der ersten Rollachse und/oder der zweiten Rollachse zwischen 20 mm und 40 mm und zum Beispiel bis zu 25 mm, bis zu 30 mm, bis zu 35 mm betragen. Der Durchmesser kann sich quer zur Längsrichtung der jeweiligen Rollachse erstrecken.

Gemäß einer weiteren Ausführungsform weist der Rollenblock eine Haltevorrichtung auf. Die Haltevorrichtung kann in einem zugeschwenkten Zustand des Rollenblocks die erste Rollachse mit der zweiten Rollachse Kraft übertragend verbinden. Die Haltevorrichtung kann zwischen dem ersten und dem zweiten Ende angeordnet sein. Im zugeschwenkten Zustand kann die erste Rollachse parallel zur zweiten Rollachse verlaufen und/oder die Verschlussvorrichtung geschlossen sein.

Ein Vorteil dieser Ausführungsformen kann sein, dass im Einsatz des Rollenblocks ein Durchbiegen der Rollachsen auf zulässige Werte begrenzt werden kann, ohne dass das Gewicht des Rollenblock unnötig groß wird.

### Kurze Beschreibung der Zeichnungen

Zum besseren Verständnis der vorliegenden Erfindung ist nachfolgend auf die Zeichnungen Bezug genommen. Diese zeigen lediglich Ausführungsbeispiele des Erfindungsgegenstands. Merkmale dieser Ausführungsbeispiele sind unabhängig voneinander kombinierbar.

In den Figuren und der dazugehörigen Beschreibung sind gleiche oder gleichwirkende Teile mit den gleichen Bezugszeichen versehen.

Es zeigen:
- Figur 1: ein Ausführungsbeispiel des erfindungsgemäßen Rollenblocks in einem aufgeklappten Zustand in einer schematischen Frontansicht,
- Figur 1a: eine schematische Prinzipskizze des Ausführungsbeispiels der Figur 1 mit ungleich von einer Schwenkachse beabstandeten Rollachsen,
- Figur 1b: eine schematische Prinzipskizze mit einem weiteren Ausführungsbeispiel des erfindungsgemäßen Rollenblocks mit gleich von einer Schwenkachse beabstandeten Rollachsen,
- Figur 2: das Ausführungsbeispiel der Figur 1 in einem zusammengeklappten Zustand in einer schematischen Frontansicht,
- Figur 3: das Ausführungsbeispiel der Figur 1 in einem zusammengeklappten Zustand in einer schematischen Rückansicht,
- Figur 4: das Ausführungsbeispiel der Figur 1 in einem zusammengeklappten Zustand in einer schematischen Detailansicht,
- Figur 5: das Detail der Figur 4 schematisch von der gegenüberliegenden Seite,
- Figur 6: das Ausführungsbeispiel der Figur 1 in einem zusammengeklappten Zustand in einer schematischen Detailansicht,
- Figur 7: das Ausführungsbeispiel der Figur 1 in einem zusammengeklappten Zustand in einer schematischen Perspektivansicht und mit verschobenen Seilrollen,
- Figur 8: das Ausführungsbeispiel der Figur 1 in einem zusammengeklappten Zustand schematisch in einer vergrößerten Teilansicht,
- Figur 9: der in Figur 8 dargestellte Teil schematisch aus einer anderen Blickrichtung,
- Figur 10: der in Figuren 8 und 9 dargestellte Teil schematisch aus einer weiteren Blickrichtung,
- Figur 11: ein weiteres Ausführungsbeispiel des erfindungsgemäßen Rollenblocks in einem aufgeklappten Zustand in einer schematischen Teilansicht,
- Figur 12: der in Figur 11 dargestellte Teil schematisch aus einer anderen Blickrichtung,
- Figur 13: der in Figuren 11 und 12 dargestellte Teil schematisch aus einer weiteren Blickrichtung,
- Figuren 14 bis 18: ein weiteres Ausführungsbeispiel des erfindungsgemäßen Rollenblocks in unterschiedlichen Ansichten, und
- Figuren 19 und 20: ein weiteres Ausführungsbeispiel des erfindungsgemäßen Rollenblocks in unterschiedlichen Ansichten.

### Wege zur Ausführung der Erfindung

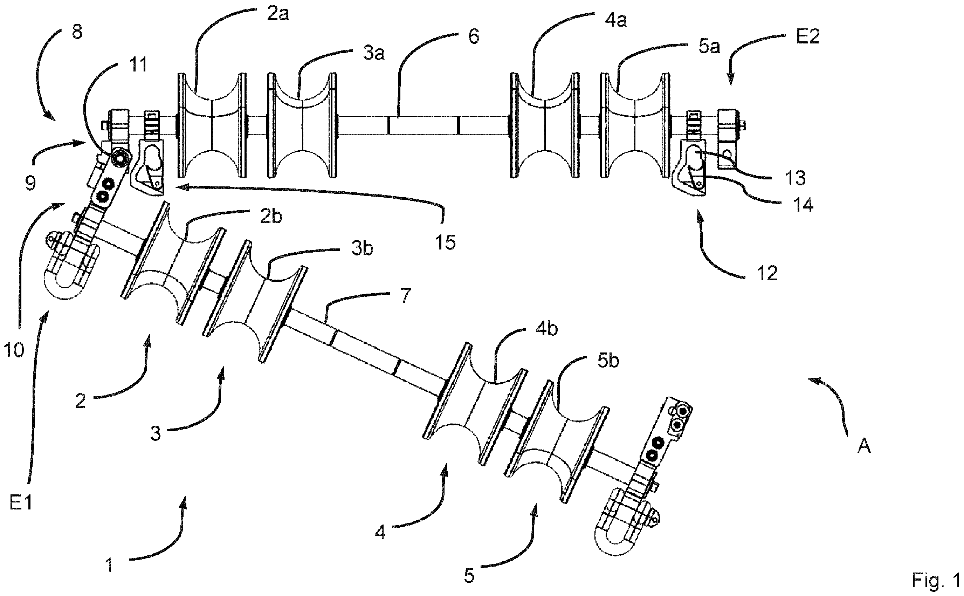

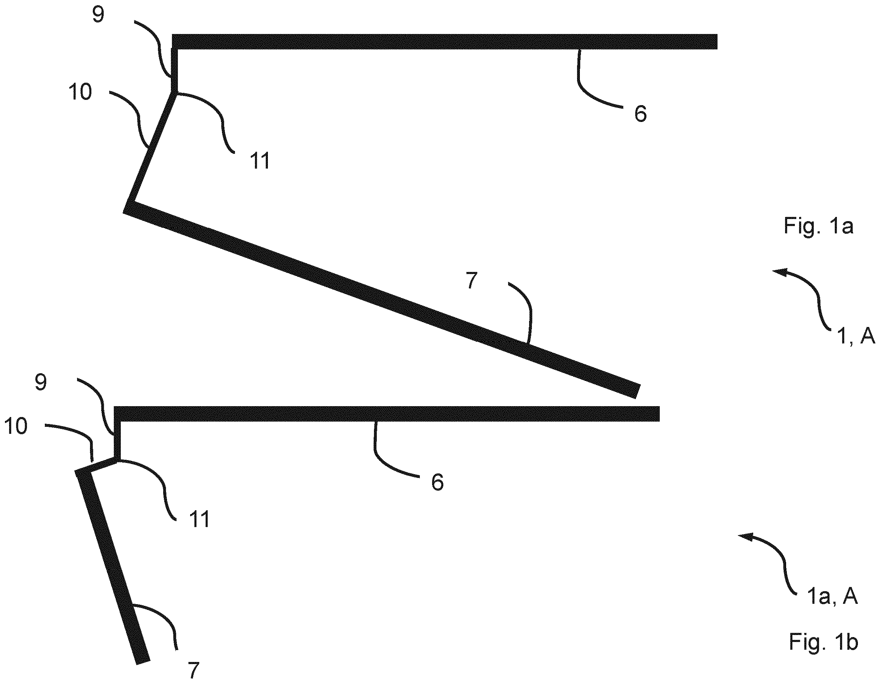

Figur 1 zeigt ein erstes mögliches Ausführungsbeispiel eines erfindungsgemäßen Rollenblocks 1. Der Rollenblock 1 weist ein erstes Paar 2 von Seillaufrollen 2a, 2b und ein zweites Paar 3 von Seillaufrollen 3a, 3b auf. Der Rollenblock 1 kann ferner ein drittes Paar 4 von Seillaufrollen 4a, 4b aufweisen. Der Rollenblock 1 kann ferner ein viertes Paar 5 von Seillaufrollen 5a, 5b aufweisen. Optional kann der Rollenblock 1 ein fünftes Paar von Seillaufrollen aufweisen, das der Übersichtlichkeit halber nicht dargestellt ist.

Die Seillaufrollen 2a, 2b des ersten Paares 2 sind einander gegenüberliegend anordenbar. Die Seillaufrollen 3a, 3b des zweiten Paares 3 sind einander gegenüberliegend anordenbar. Die Seillaufrollen 4a, 4b des dritten Paares 4 können einander gegenüberliegend anordenbar sein. Die Seillaufrollen 5a, 5b des vierten Paares 5 können einander gegenüberliegend anordenbar sein.

Eine erste Seillaufrolle 2a des ersten Paares 2 ist auf einer ersten Rollachse 6 angeordnet. Eine zweite Seillaufrolle 2b des ersten Paares 2 ist auf einer von der ersten Rollachse 6 beabstandet angeordneten zweiten Rollachse 7 angeordnet. Eine erste Seillaufrolle 3a des zweiten Paares 3 ist auf der ersten Rollachse 6 angeordnet. Eine zweite Seillaufrolle 3b des zweiten Paares 3 ist auf der zweiten Rollachse 7 angeordnet. Eine erste Seillaufrolle 4a des dritten Paares 4 kann auf der ersten Rollachse 6 angeordnet sein. Eine zweite Seillaufrolle 4b des dritten Paares 4 kann auf der zweiten Rollachse 7 angeordnet sein. Eine erste Seillaufrolle 5a des vierten Paares 5 kann auf der ersten Rollachse 6 angeordnet sein. Eine zweite Seillaufrolle 5b des vierten Paares 5 kann auf der zweiten Rollachse 7 angeordnet sein. Die erste Rollachse 6 und/oder die zweite Rollachse 6 kann zylindrisch ausgeformt und beispielsweise als eine Metallstange mit einem runden und insbesondere kreisförmigen Querschnitt ausgebildet sein. Die Seillaufrollen des optionalen fünften Paares können jeweils mittig auf einer der Rollachsen 6, 7 angeordnet sein.

Der Rollenblock 1 weist eine Verbindungsvorrichtung 8 auf. Die Verbindungsvorrichtung 8 verbindet die erste Rollenachse 6 mit der zweiten Rollenachse 7 unverlierbar und relativ zueinander schwenkbar.

Die Verbindungsvorrichtung 8 kann scharnierförmig und mit zwei Flügeln 9, 10 und einer die Flügel 9, 10 miteinander verbindenden Schwenkachse 11 ausgebildet sein. Die erste Rollachse 6 kann an einem ersten der Flügel 9 und die zweite Rollachse 7 an einem zweiten der Flügel 10 angebracht sein. Die Schwenkachse 11 kann einen Metallstift oder -zapfen oder -bolzen aufweisen und von den beiden Flügeln 9, 10 umfasst sein, sodass die Flügel 9, 10 um die Schwenkachse 11 schwenken können. Die Schwenkachse 11 und die Flügel 9, 10 können so dimensioniert sein, dass sie einer Last zumindest eines auf einem der zweiten Seillaufrollen 2b, 3b, 4b, 5b aufliegenden Leiterseils standhalten.

In Figur 1 ist der Rollenblock 1 beispielhaft in ihrem aufgeschwenkten Zustand A gezeigt, in dem die Rollachsen um die Schwenkachse 11 voneinander weg geschwenkt sind. Im aufgeschwenkten Zustand A kann ein Winkel zwischen den beiden Rollachsen 6, 7 zwischen 0 Grad und 90 Grad betragen.

Die ersten Rollachse 6 kann näher an der Schwenkachse 11 angeordnet sein als die zweite Rollachse 7. Insbesondere entlang des von der Schwenkachse 11 zur zweiten Rollachse 7 führenden Flügels 10 kann der Abstand zwischen der zweiten Rollachse 7 und der Schwenkachse 11 größer sein, als der Abstand zwischen der ersten Rollachse 6 und der Schwenkachse 11 entlang des von der Schwenkachse 11 zur ersten Rollachse 6 führenden Flügels 9.

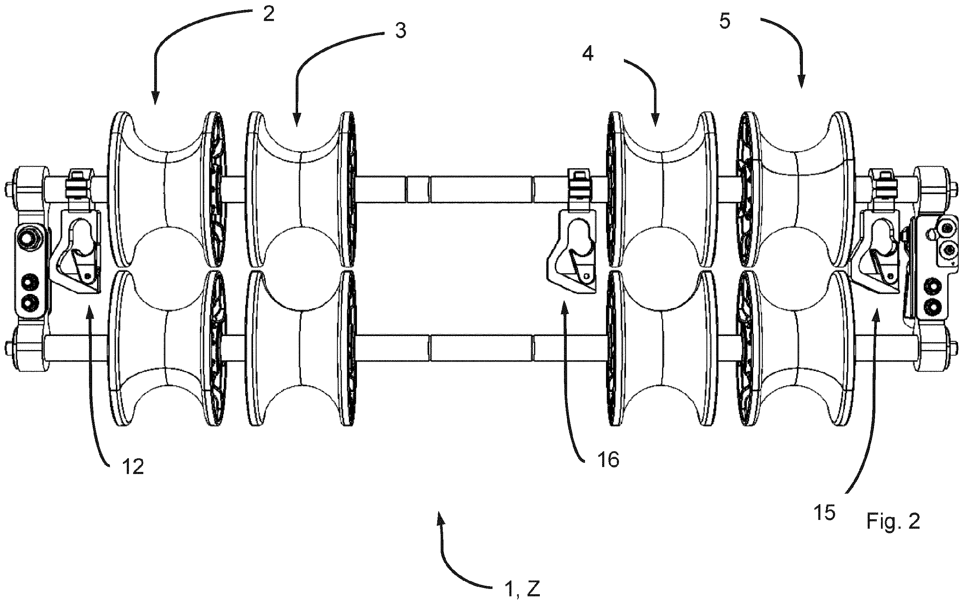

Ein Vorteil dieser Ausführungsform kann sein, dass durch die unterschiedlichen Abstände der Rollenachsen 6, 7 von der Schwenkachse 11 die Montage des Rollenblocks 1 auf den Leiterseilen vereinfacht sein kann. So können beispielsweise die Seilrollen 2a, 3a, 4a, 5a, die auf der näher zur Schwenkachse 11 gelegenen Rollachse 6 angeordnet sind, auf die Leiterseile gelegt werden. Die andere Rollachse 7 kann dann nach oben geschwenkt werden, bis die zweiten Seilrollen 2b, 3b, 4b, 5b mit den ersten Seilrollen 2a, 3a, 4a, 5a Rollenpaare 2, 3, 4, 5 bilden. Beispielswiese können die Rollachsen 6, 7 parallel zueinander ausgerichtet sein, wenn die Seilrollen 2a, 2b, 3a, 3b, 4a, 4b, 5a, 5b Rollenpaare 2, 3, 4, 5 bilden. Dies ist beispielhaft in der weiter unten beschriebenen Figur 2 dargestellt. Wegen des längeren Abstandes kann der beim Schließen zu überwindende Schwenkwinkel der weiter entfernt von der Schwenkachse 11 angeordneten Rollachse 7 geringer sein, was in den weiter unten beschriebenen Figuren 1a und 1b gezeigt ist.

Insbesondere kann einer der beiden Flügel 9, 10 kürzer als der andere der beiden Flügel 9, 10 sein. Beispielsweise ist der Flügel 10 länger als der Flügel 9.

Der Rollenblock 1 kann entlang zumindest der Rollenachse 6 ein erstes Ende E1 aufweisen. Die Verbindungsvorrichtung 8 kann am ersten Ende E1 angeordnet sein. Gegenüber dem ersten Ende E1 kann der Rollenblock 1 ein zweites Ende E2 aufweisen.

Der Rollenblock 1 kann eine Befestigungsvorrichtung 12 zur bewegungsübertragenden Befestigung des Rollenblocks 1 an einem Tragseil aufweisen. Die Befestigungsvorrichtung 12 kann an der ersten Rollachse 6 oder der zweiten Rollachse 7 und, wie beispielhaft gezeigt, an der ersten Rollachse 6 angebracht sein. Mit der Befestigungsvorrichtung 12 kann eine Sollposition für ein Tragseil vorgegeben werden. Die Befestigungsvorrichtung 12 kann eine Aussparung 13 zur Aufnahme eines Tragseils aufweisen. Der Querschnitt der Aussparung 13 kann dem Querschnitt des Tragseils im Wesentlichen entsprechen. Die Aussparung 13 kann sich weg von der Rollachse 6 oder entlang der Rollachse 6 oder weg von der Verbindungsvorrichtung 8 öffnen. Eine Öffnung der Befestigungsvorrichtung 12, durch die die Aussparung 13 zugänglich sein kann, ist im dargestellten Ausführungsbeispiel durch eine Sperre 14 verschlossen oder blockiert. Die Sperre 14 kann entgegen einer Federkraft auf die Verbindungsvorrichtung 8 zu oder von dieser weg weiter in die Befestigungsvorrichtung 12 schwenkbar sein, um ein Tragseil in die Aussparung 13 einlegen zu können. Erstreckt sich das Tragseil im Wesentlichen senkrecht zur ersten Rollachse 6 oder entlang der Schwenkachse 11 durch die Aussparung 13, kann die Federkraft bewirken, dass die Sperre 14 wieder in die dargestellte Verschlussposition bewegt wird, in der die Öffnung blockiert und das Tragseil an einem ungewollten Verlassen der Befestigungsvorrichtung 12 gehindert ist.

Wenn die die Befestigungsvorrichtung 12 an der ersten Rollachse 6 angebracht ist, die näher zu der Schwenkachse 11 als die zweite Rollachse 7 angeordnet sein kann, und auf der ersten Rollachse 6 geführten erste Seilrollen 2a, 3a, 4a, 5a auf den Leiterseilen aufliegen, kann die Befestigungsvorrichtung 12 von der ersten Rollachse 6 herabhängen, sodass diese einfach ein horizontal neben den Leiterseilen verlaufendes Tragseil erreicht und einfach an diesem befestigbar ist.

Der Rollenblock 1 kann zwei Befestigungsvorrichtungen 12, 15 zur bewegungsübertragenden Befestigung des Rollenblocks 1 an zwei Tragseilen aufweisen. Die Befestigungsvorrichtungen 12, 15 können das erste und das zweite Paar 2, 3 flankieren. Flankieren kann in diesem Fall bedeuten, dass nur das erste Paar 2 und das zweite Paar 3 zwischen den Befestigungsvorrichtungen 12, 15 angeordnet sind. Alternativ können mehrere und beispielsweise alle Paare 2, 3, 4, 5 des Rollenblocks 1 zwischen den Befestigungsvorrichtungen 12, 15 angeordnet sein. Die Befestigungsvorrichtungen 12, 15 können jeweils zwischen dem Paar 2, 5, dass am nächsten zu einem der Enden E1, E2 des Rollenblocks 1 angeordnet ist, und dem jeweiligen Ende E1, E2 angeordnet sein.

Die beiden Befestigungsvorrichtungen 12, 15 können an derselben Rollachse 6, 7 oder an unterschiedlichen der Rollachsen 6, 7angebracht sein.

Figur 1a zeigt das Ausführungsbeispiel der Figur 1 schematisch als Prinzipskizze, wobei die Schwenkachse 11 unterschiedlich weit von den Rollachsen 6, 7 entfernt angeordnet ist. Figur 1b zeigt ein weiteres Ausführungsbeispiel des Rollenblocks 1a schematisch als Prinzipskizze, wobei die Rollachsen 6, 7 im Ausführungsbeispiel der Figur 1b gleich weit von der Schwenkachse 11 entfernt angeordnet sind.

In Figuren 1a und 1b liegen die ersten Seilrollen 2a, 3a, 4a, 5a (hier nicht gezeigt) auf Leiterseilen (hier ebenfalls nicht gezeigt) auf. Die erste Rollenachse 6 ist also im Wesentlichen horizontal ausgerichtet. Der Rollenblock 1 ist in ihrem aufgeschwenkten Zustand A, sodass die zweite Rollachse 7 der Schwerkraft folgend herabhängt. Da in Figur 1a der Abstand zwischen der ersten Rollachse 6 und der Schwenkachse 11 größer ist als der Abstand zwischen der zweiten Rollachse 7 und der Schwenkachse 11, ist der Winkel zwischen den Rollachsen 6, 7 des Rollenblocks 1 der Figur 1 im aufgeschwenkten Zustand A kleiner, als der Winkel zwischen den Rollachsen 6, 7 des Rollenblocks 1a der Figur 1b. Die zweite Rollachse 7 ragt in der Figur 1b aus dem Zeichenbereich heraus und ist daher nur teilweise dargestellt.

Figur 2 zeigt das Ausführungsbeispiel der Figur 1 in einem zusammengeklappten Zustand Z in einer schematischen Frontansicht.

Im zusammengeklappten Zustand Z können die beiden Rollachsen 6, 7 parallel zueinander angeordnet sein. Der Rollenblock 1 kann mehr als zwei und beispielsweise drei Befestigungsvorrichtungen 12, 15, 16 zur Anbringung des Rollenblocks 1 an mehr als zwei und beispielsweise drei Tragseilen aufweisen. Zwei der Befestigungsvorrichtungen 12, 15 können alle Paare 2, 3, 4, 5 flankieren. Die dritte der Befestigungsvorrichtungen 16 kann zwischen zwei der Paare 3, 4 angeordnet sein.

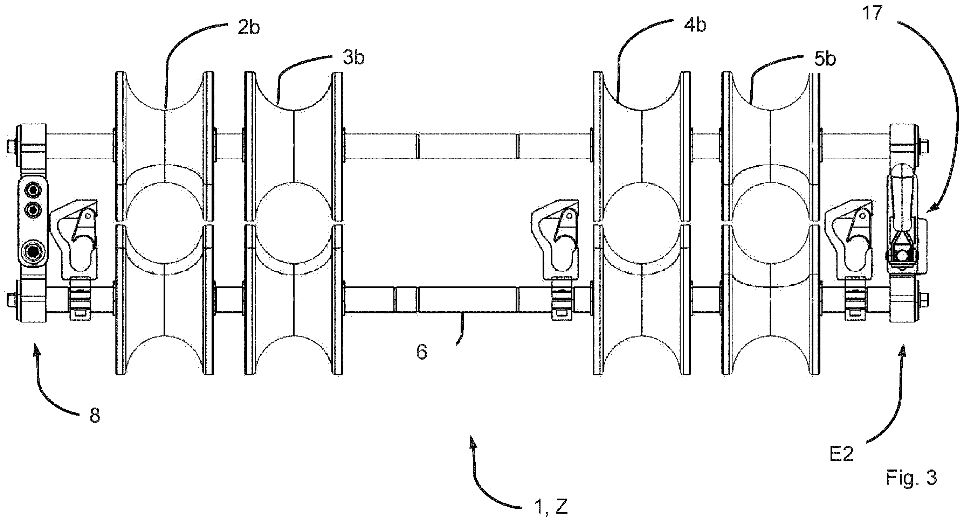

Figur 3 zeigt das Ausführungsbeispiel der Figur 1 in einem zusammengeklappten Zustand Z in einer schematischen Rückansicht,

An ihrem zweiten Ende E2 kann der Rollenblock 1 mit einer auch wiederholt öffenbaren und verschließbaren Verschlussvorrichtung 17 versehen sein. Im zusammengeklappten Zustand Z des Rollenblocks 1 kann die Verschlussvorrichtung 17 in ihrem verschlossenen Zustand ein Schwenken der ersten und zweiten Rollachsen 6, 7 relativ zueinander und insbesondere in Richtung auf den aufgeschwenkten Zustand verhindern. Im geöffneten Zustand der Verschlussvorrichtung 16 kann die Verschlussvorrichtung ein Schwenken der ersten und zweiten Rollachsen relativ zueinander und insbesondere aus dem zusammengeklappten Zustand Z in den aufgeschwenkten Zustand freigeben. Die Verschlussvorrichtung 17 kann wie die Verbindungsvorrichtung 8 ausgebildet sein, Gewichtslasten von auf den zweiten Seilrollen 2b, 3b, 4b, 5b aufliegenden Leiterseilen an die erste Rollachse 6 weiterzuleiten.

Die Verschlussvorrichtung 17 kann einen manuell öffenbaren mechanischen Verschlussmechanismus aufweisen. Die Verschlussvorrichtung 17 kann einen Schnappverschluss aufweisen, der durch das Zusammenklappen der Rollachsen 6, 7 in deren im zusammengeklappter Zustand Z parallele Position zueinander selbsttätig schließt. Alternativ kann der Verschlussmechanismus einen womöglich manuell zu betätigenden Schubstangenspanner aufweisen.

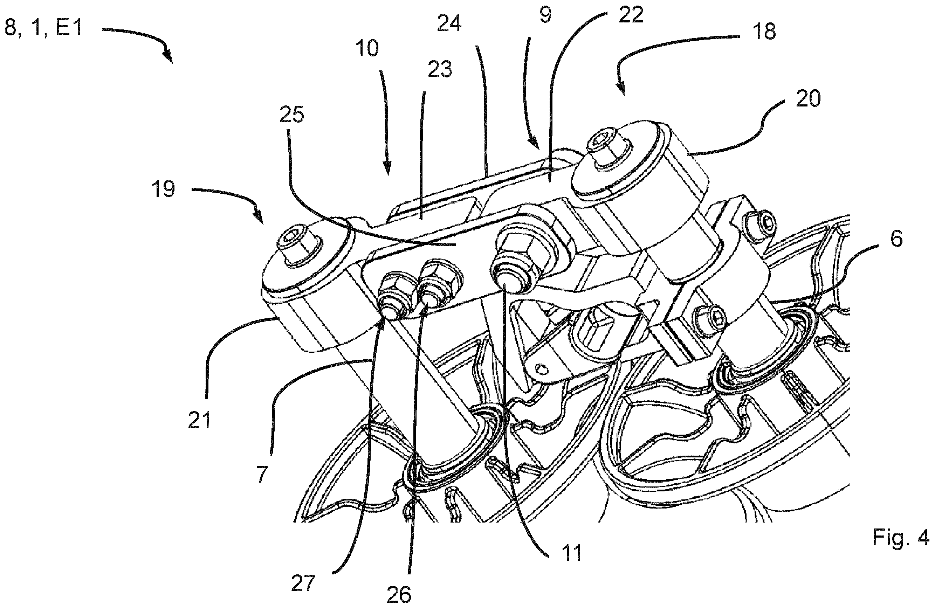

Figur 4 zeigt das Ausführungsbeispiel der Figur 1 im zusammengeklappten Zustand Z in einer schematischen Detailansicht.

Der erste Flügel 9, der kürzer sein kann als der zweite Flügel 10, kann eine erste Anbringaufnahme 18 aufweisen. Der zweite Flügel 10 kann eine zweite Anbringaufnahme 19 aufweisen. Beispielswiese die erste Rollachsen 6 kann an der ersten Anbringaufnahme 18 angebracht sein. Beispielswiese die zweite Rollachsen 7 kann an der zweiten Anbringaufnahme 19 angebracht sein.

Zumindest eine der Anbringaufnahmen 18, 19 kann einen Anbringring 20, 21, in den eine der ersten und zweiten Rollachsen 6, 7 hineinragt, aufweisen. Die zumindest eine der Anbringaufnahmen 18, 19 kann einen vom Anbringring 20, 21 weg vorspringenden Befestigungsvorsprung 22, 23 aufweisen.

Die jeweilige Rollachse 6, 7 kann somit einfach an der Anbringaufnahme 18, 19 anbringbar sein, etwa indem die Rollachse 6, 7 im Anbringring 20, 21 verpresst oder dort angeordnet verschweißt, verklebt oder anderweitig befestigt ist, sodass die Befestigung der Rollachse 6, 7 an der Verbindungsvorrichtung 8 wenig Platz benötigt. Der Befestigungsvorsprung 22, 23 kann eine Verbindung zwischen den Anbringaufnahmen 18 ,19 vereinfachen, ohne dass hierdurch die Befestigung der Rollachse 6, 7 am Anbringring 20, 21 beeinträchtigt wird.

Einander gegenüberliegenden Seiten wenigstens eines der Befestigungsvorsprünge 22, 23 können zwischen zwei Verbindungselementen 24, 25 einer Verbindungseinrichtung der Verbindungsvorrichtung 8 angeordnet sein. Die Verbindungselemente 24, 25 können einfach herzustellende und leicht zu montierende Platten, insbesondere Metallplatten aufweisen oder sein. Der Befestigungsvorsprung 23 kann mit den Verbindungselementen 24, 25 verschweißt, verklebt, verschraubt oder anderweitig befestigt sein. Beispielswiese kann der Befestigungsvorsprung 23 an jeder seiner einander gegenüberliegenden Seiten an mindestens einem Befestigungspunkt 26, 27 und beispielsweise zwei Befestigungspunkten 26, 27 mit einem der Verbindungselemente 24, 25 verbunden sein. Sind zwei Befestigungspunkte 24, 25 vorgesehen, können diese aus Sicht der Schwenkachse 11 hintereinander angeordnet sein. Mit zwei Befestigungspunkten 26, 27 kann der längere Flügel 10 starr ausgebildet sein. Die beiden Befestigungspunkte 26, 27 können Schweiß- oder Klebepunkte sein. Durch die beiden Befestigungspunkte 26, 27 jeder einander gegenüberliegenden Seite und durch die Verbindungselemente 24, 25 können sich Schrauben erstrecken. Der Befestigungsvorsprung 23 kann zwischen den Verbindungselementen 24, 25 verpresst sein, beispielswiese durch die Köpfe der Schrauben und auf der gegenüberliegenden Seite der Verbindungsvorrichtung 8 angeordnete und mit den Schrauben verschraubte Muttern.

Die Schwenkachse 11 kann sich durch den Befestigungsvorsprung 22 und die Verbindungselemente 24, 25 erstrecken, und die Verbindungselemente 24, 25 drehbar mit dem Befestigungsvorsprung 22 verbinden. Beispielswiese kann die Schwenkachse 11 eine Schraube und eine Mutter aufweisen, wobei der Schraubenkopf und die Mutter die Verbindungselemente 24, 25 aufeinander zu und gegen den Befestigungsvorsprung 22 pressen.

In Figur 1 weist die Anbringaufnahme 19 ein optionales Montageelement zur Montage eines Sicherungselementes auf, das in Figur 4 nicht dargestellt ist. Das Montageelement kann am Anbringring 21 und insbesondere an dessen Mantel- oder Außenseite angeordnet sein. Das Montageelement kann an einer vom Befestigungsvorsprung 23 weg weisenden Seite des Anbringrings 21 angeordnet sein. Das Montageelement kann ein Durchgangsloch aufweisen, in das das Sicherungselement zumindest teilweise einsetzbar ist. Das Sicherungselement ist beispielsweise ein Karabinerhaken. In Figur 1 ist das Sicherungselement beispielhaft als Schäkel dargestellt.

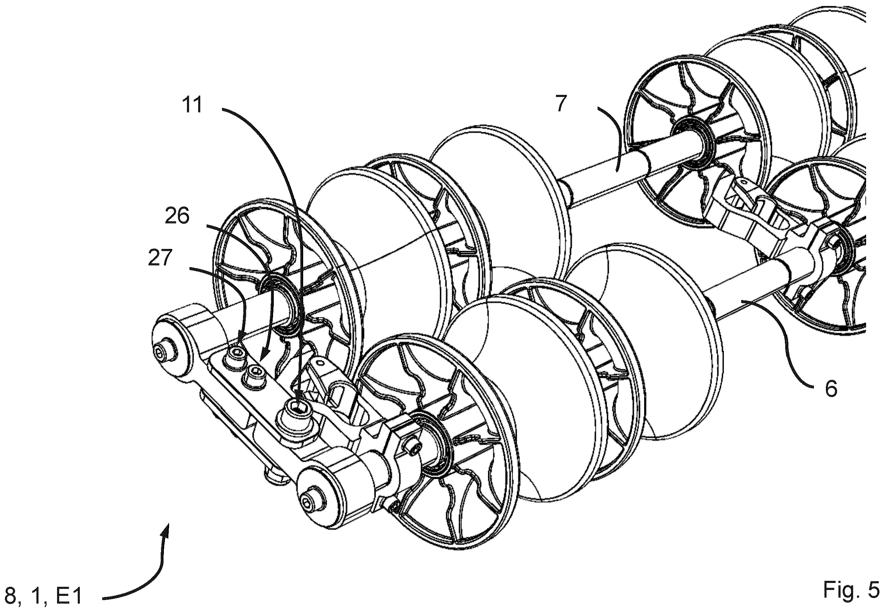

Figur 5 zeigt das Detail der Figur 4 schematisch von der gegenüberliegenden Seite.

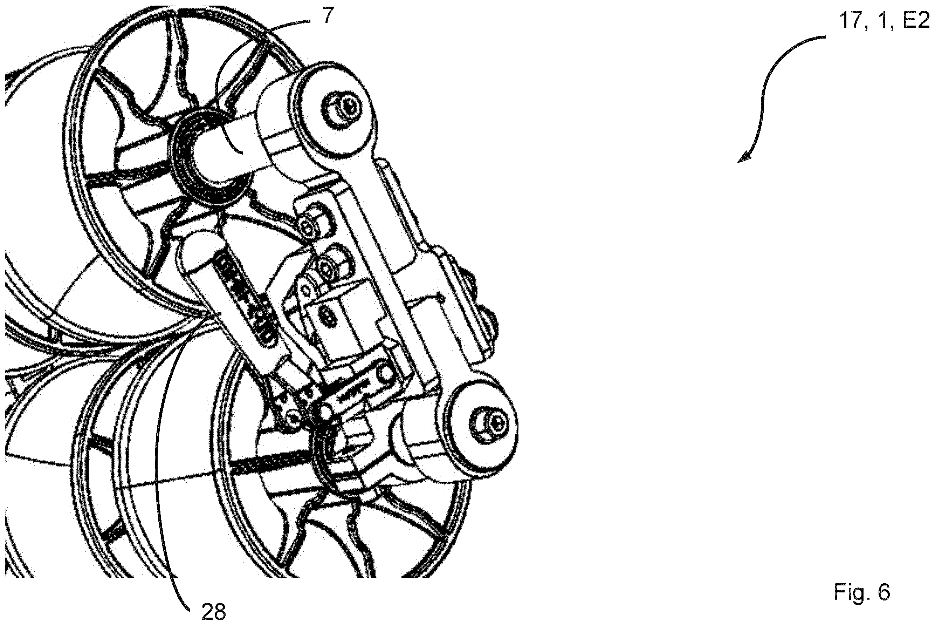

Figur 6 zeigt eine vergrößerte Ansicht der am Ende E2 des Rollenblocks 1 angeordneten Verschlussvorrichtung 17. Die Verschlussvorrichtung 17 kann wie die Verbindungsvorrichtung 8 Anbringaufnahmen mit Anbringringen und Befestigungsvorsprüngen aufweisen und über diese an den Rollachsen 6, 7 befestigt sein. Anstelle der Verbindungselemente kann die Verschlussvorrichtung 17 eine den manuell betätigbaren mechanischen Verschlussmechanismus aufweisen. Der der zweiten Rollachse 7 zugeordnete Befestigungsvorsprung am zweiten Ende E2 kann mittels zweier Befestigungspunkte am Verschlussmechanismus starr verbunden sein. Der Verschlussmechanismus kann mit einem Bedienhebel 28 versehen sein. Der Bedienhebel 28 kann ein Verschließelement, etwa ein den zusammen geklappten Zustand Z gegen ungewolltes Öffnen sichernden Rastelementes, das am zweiten Ende E2 anstelle der am ersten Ende E1 vorgesehenen Schwenkachse angeordnet ist, betätigen, um die Verschlussvorrichtung 17 zu öffnen.

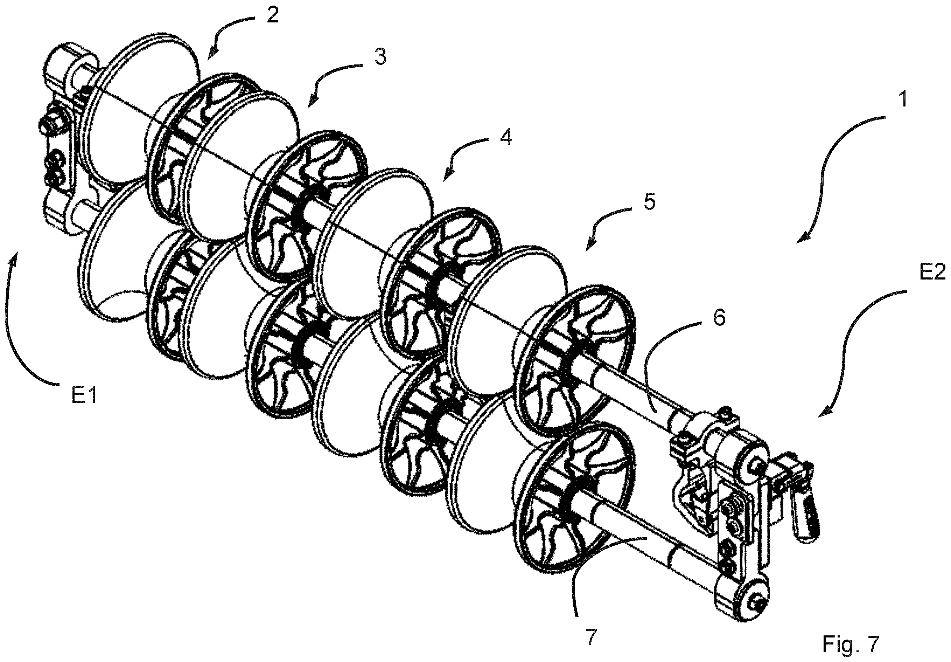

Figur 7 zeigt das Ausführungsbeispiel der Figur 1 in einem zusammengeklappten Zustand in einer schematischen Perspektivansicht von der anderen Seite und mit verschobenen Seilrollen.

In Figur 7 sind die Rollenpaare 2, 3 und die weiteren optionalen Rollenpaare 4, 5 beispielhaft in Richtung auf das erste Ende E1 des Rollenblocks 1 verschoben. Die Rollenpaare 2, 3, 4, 5 können beliebig auf den Rollachsen 6, 7 verschiebbar sein und optional an beliebigen Positionen auf den Rollachsen 6, 7 fixierbar sein.

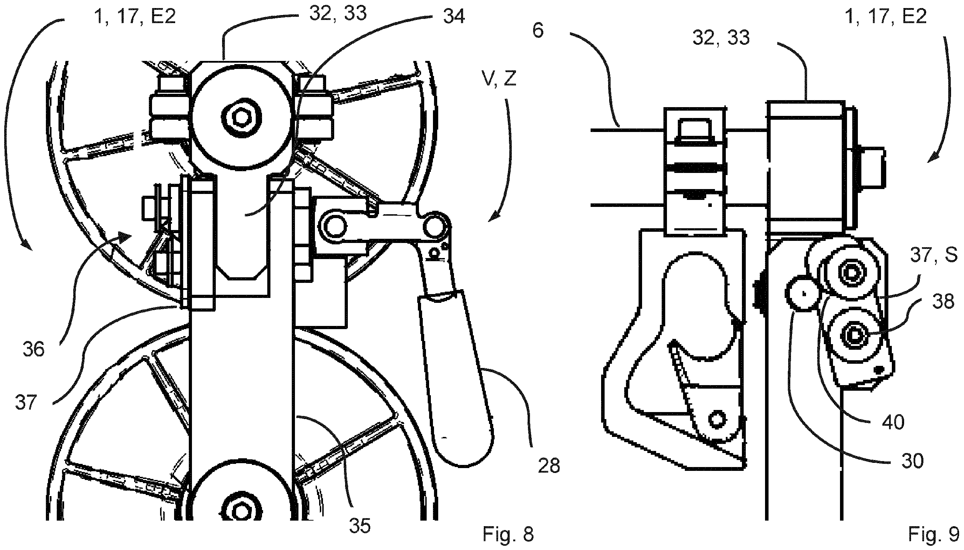

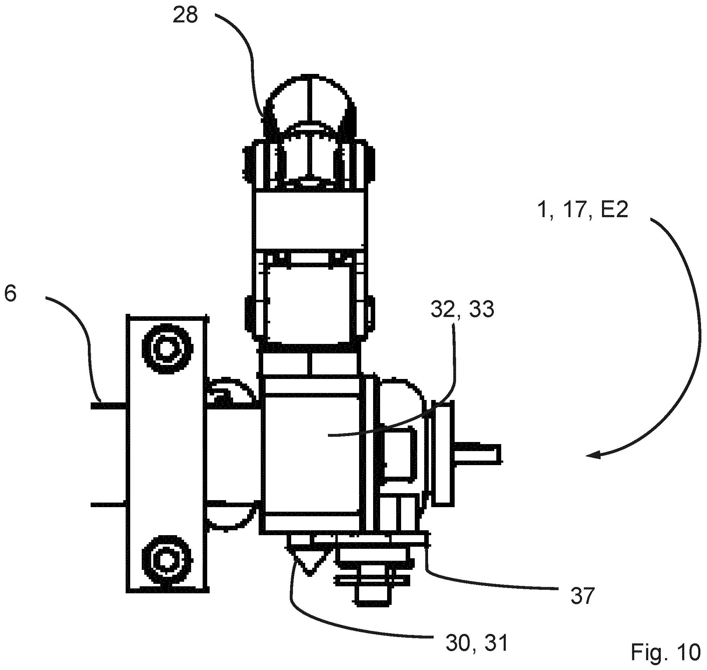

Figur 8 zeigt das Ausführungsbeispiel der Figur 1 im zusammengeklappten Zustand schematisch in einer vergrößerten Teilansicht. Figuren 9 und 10 zeigen weitere Ansichten des Rollenblocks des Ausführungsbeispiels der Figur 8.

Das zweite Ende E2 weist in der Ansicht der Figur 8 aus der Zeichenebene heraus. In Figuren 9 und 10 weist das zweite Ende E2 nach rechts.

Der Rollenblock 1 ist in seinem zusammengeklappten Zustand Z, und der Verschlussmechanismus 17 ist in seinem verschlossenen Zustand V, in dem die zweite Rollachse 7 nicht von der ersten Rollachse wegklappbar ist, dargestellt.

Der Verschlussmechanismus 17 kann einen Schubstangenspanner mit dem Hebel 28 und einer Schubstange 30 aufweisen, wobei der Hebel 28 bewegungsübertragend mit der Schubstange 30 verbunden ist. Ein Schwenken des Hebels 28 kann die Schubstange 30 entlang ihrer Längsrichtung verschieben. Insbesondere kann die Längsrichtung der Schubstange 30 senkrecht zu der ersten Rollachse 6 und/oder der zweiten Rollachse 7 verlaufen, insbesondere im verschlossenen Zustand V. Alternativ könnte ein Schwenkstangenspanner, dessen Schwenkstange durch Betätigung des Bedienhebels 28 in den verschlossenen Zustand V schwenkbar ist, verwendet werden.

An ihrem freien Ende 31 kann die Schubstange 30 einen abnehmenden Durchmesser aufweisen. Beispielsweise kann das freie Ende 31 konisch und/oder spitz zulaufend ausgebildet sein.

Die Verschlussvorrichtung 17 kann eine weitere Anbringaufnahme 32 mit einem Anbringring 33 und einem Befestigungsvorsprung 34 aufweisen. Die weitere Anbringaufnahme 32 kann an der ersten Rollachse 6 angebracht sein.

Bei allen offenbarten Ausführungsbeispielen kann der Anbringring 33 eine von der Ringform abweichende Mantelfläche oder Außenfläche aufweisen. Im Ausführungsbeispiel der Figur 8 sind zumindest ausgewählte der Mantel- oder Außenflächen eben ausgeformt. Der Anbringring kann auch als Anbringelement bezeichnet werden.

Der Befestigungsvorsprung 34 kann ein Durchgangsloch aufweisen, durch das sich die Schubstange 30 im verschlossenen Zustand V zumindest teilweise erstreckt. Alternativ kann der Befestigungsvorsprung 34 einen sich parallel zur ersten Rollachse 6 öffnenden Schlitz aufweisen, in den die Schwenkstange im verschlossenen Zustand V hineingeschwenkt ist.

Der Schubstangenspanner kann bewegungsübertragend mit der zweiten Rollachse 7 verbunden sein. Insbesondere kann die Verschlussvorrichtung 17 noch eine weitere Anbringaufnahme 35, die der zweiten Rollachse 7 angebracht ist und an der der Schubstangenspanner befestigt ist, aufweisen.

Im Unterschied zu den vorherigen Ausführungsbeispielen weist die weitere Anbringaufnahme 35 kein Anbringelement mit Befestigungsvorsprung auf. Stattdessen ist die Anbringaufnahme 35 beispielhaft als ein Anbringblock ausgebildet. Der Anbringblock weist wie der Anbringring eine Öffnung auf, in der ein Teil und beispielsweise ein Ende der zweiten Rollachse 7 angeordnet ist. An einem von der Öffnung weg weisenden Ende 36 kann der Anbringblock einen Schlitz aufweisen, der sich weg von der Öffnung und optional parallel zur zweiten Rollachse 7 öffnet. Im verschlossenen Zustand Z kann der 34 Anbringvorsprung 34 im Schlitz angeordnet sein. Den Schlitz quer zur zweiten Rollachse 7 begrenzende Flanken können quer zur zweiten Rollachse 7 durch die Flanken verlaufende Öffnungen aufweisen. Wenigstens eine der Öffnungen kann eine Durchgangsöffnung sein. Eine der Öffnungen kann eine einseitig geschlossene Öffnung, also ein Sackloch, sein. Im verschlossenen Zustand Z kann sich die Schubstange durch die Öffnungen der beiden Flanken erstrecken.

Die Verschlusseinrichtung 17 kann ausgestaltet sein, die Schubstange 30 im verschlossenen Zustand V zu halten, um ein ungewolltes Öffnen der Verschlusseinrichtung 19 zu vermeiden. Beispielsweise kann die Verschlusseinrichtung 17 ein Blockierelement 37 aufweisen und eine zum freien Ende 31 verlaufende Längsseite der Schubstange 30 kann eine quer zu ihrer Längsrichtung verlaufende Nut aufweisen. In einem den verschlossenen Zustand V sichernden Zustand S kann das Blockierelement 37 in die Nut eingreifen und eine Bewegung der Schubstange 30 zumindest aus dem verschlossenen Zustand V hinaus blockieren.

Das Blockierelement 37 kann eine Blockierplatte sein, die im Wesentlichen parallel zu einer durch die beiden Rollachsen 6, 7 aufgespannten Ebene angeordnet sein kann. Die Blockierplatte kann um eine Rotationsachse 38 drehbar an der weiteren Anbringaufnahme 35 angebracht sein. Die Drehachse 38 kann quer zu der durch die beiden Rollachsen 6, 7 aufgespannten Ebene verlaufen. Die Drehachse 38 kann außermittig der Blockierplatte angeordnet sein. Die Blockierplatte kann also in den und aus dem sichernden Zustand S geschwenkt werden.

An einem der Rotationsachse 38 gegenüberliegenden Bereich der Blockierplatte, der näher an der Schubstange 30 angeordnet sein kann als die Rotationsachse 38, kann die Blockierplatte ein Langloch 40 aufweisen. Das Langloch 40 kann so ausgebildet sein, dass die Blockierplatte im sichernden Zustand S mit einem parallel zur Rotationsachse 38 verlaufenden Stift verklemmt. In einem anderen als den sichernden Zustand S kann die Blockierplatte frei um die Rotationsachse 38 drehbar sein. Beispielswies erstreckt sich die längere Achse des Langlochs 40 im Wesentlichen parallel zur zweiten Rollachse 7. Alternativ zum Stift oder zusätzlich dazu kann die Blockierplatte auch durch die obere der beiden dargestellten Schrauben in der dargestellten Position des sichernden Zustands S fixiert werden. Die untere der beiden Schrauben kann die Drehachse 38 bereitstellen. Die Blockierplatte kann ein kreisförmiges Loch aufweisen, durch das sich die untere der beiden Schrauben erstreckt.

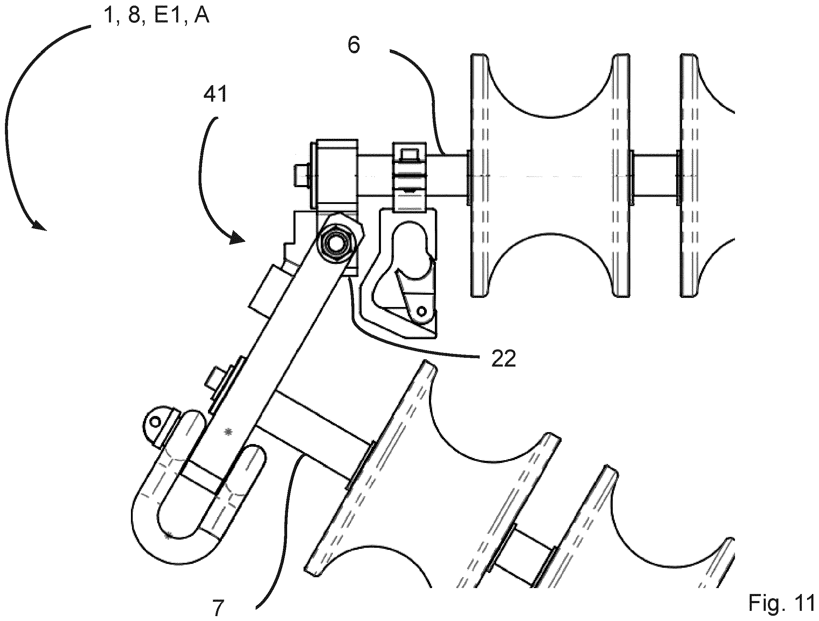

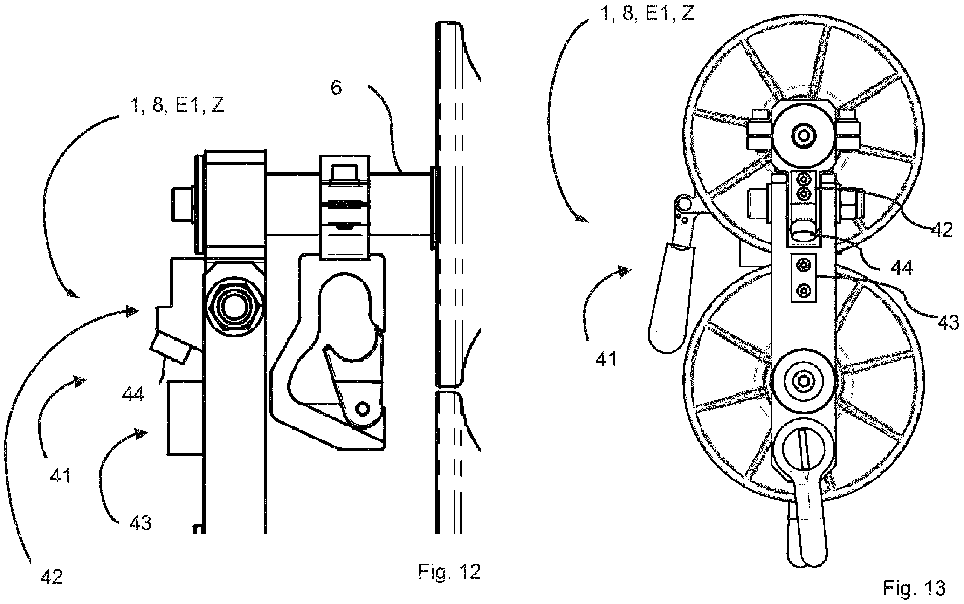

Figuren 11 bis 13 zeigen ein weiteres Ausführungsbeispiel der Verbindungsvorrichtung 8 des Rollenblocks 1 schematisch in drei unterschiedlichen Ansichten. Das erste Ende E1 weist in den Figuren 11 und 12 im Wesentlichen nach links, und in Figur 13 aus der Zeichenebene hinaus.

In den Figuren 11 bis 13 ist die Verbindungsvorrichtung 8 mit einer der Anbringaufnahme 35 entsprechenden Anbringaufnahme anstelle der zweiten Anbringaufnahme 19 gezeigt. Allerdings kann auch das Ausführungsbeispiel der Figuren 11 bis 13 die zweite Anbringaufnahme 19 anstelle der dargestellten Anbringaufnahme aufweisen.

Zusätzlich kann die Verbindungsvorrichtung 8 eine Schwenkbegrenzungseinrichtung 41 aufweisen, die ausgebildet ist, einen Winkel zwischen der ersten Rollachse 6 und der zweiten Rollachse 7 zu begrenzen. Insbesondere kann die Schwenkbegrenzungseinrichtung 41 den maximalen Öffnungswinkel, bis zu dem der Rollenblock 1 aufklappbar ist, vorgeben.

Die Schwenkbegrenzungseinrichtung 41 kann an einer vom Rollenblock 1 weg weisenden Seite der Verbindungsvorrichtung 8 angeordnet sein. Die Schwenkbegrenzungseinrichtung 41 weist beispielsweise einen ersten Anschlag 42 und einen zweiten Anschlag 43 auf. Der erste Anschlag 42 kann an dem Befestigungsvorsprung 22 angeordnet sein. Der zweite Anschlag 43 kann an der der weiteren Anbringaufnahme 35 entsprechenden Anbringaufnahme oder an dem Befestigungsvorsprung 23 angeordnet sein.

Zumindest einer der beiden Anschläge 42, 43 und beispielswiese Anschlag 42 kann an seiner im aufgeschwenkten Zustand Z dem anderen der Anschläge 42, 43 zugewandten Seite ein elastisches Element 44 aufweisen, das ein Aufeinandertreffen der beiden Anschläge 42, 43 zur Begrenzung des Öffnungswinkels dämpft.

Beispielsweise ist die Schwenkbegrenzungseinrichtung 41, den Öffnungswinkel zwischen den Rollachsen 6, 7 auf weniger als 90 °, weniger als 70 °, weniger als 45 ° oder auf 30 ° zu beschränken. Ferner kann die Schwenkbegrenzungseinrichtung 41 vermeiden, dass der längere der beiden Flügel beim Aufklappen des Rollenblocks 1 ungewünscht weit auf schwenkt, sodass die Schwenkbegrenzungseinrichtung 41 ein Schwenkmaß auf weniger als 200 mm, weniger als 150 mm oder weniger als 100 mm begrenzen kann. Ein Schwenkmaß kann ein parallel zur ersten Rollachse 6 zu messender Abstand einer Position eines von der Schwenkachse 11 weg weisenden Endes des zweiten Flügels 10 im zusammengeklappten Zustand Z und einer Position dieses Endes im aufgeschwenkter Zustand A sein.

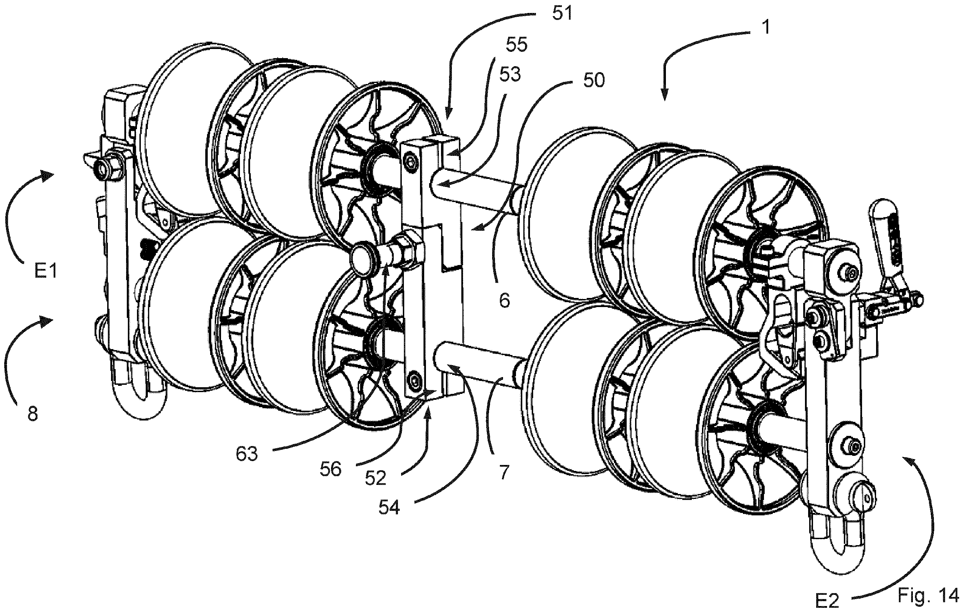

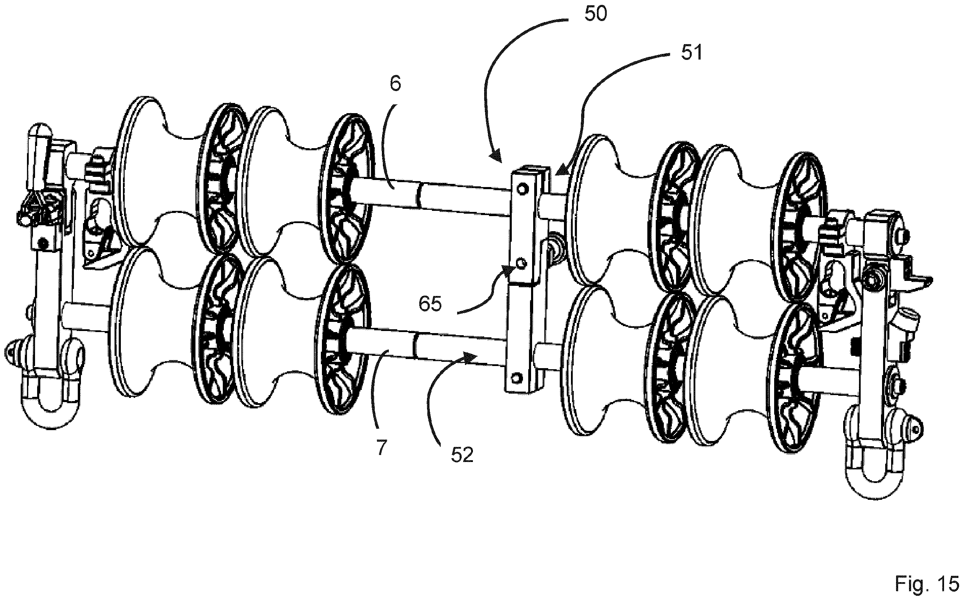

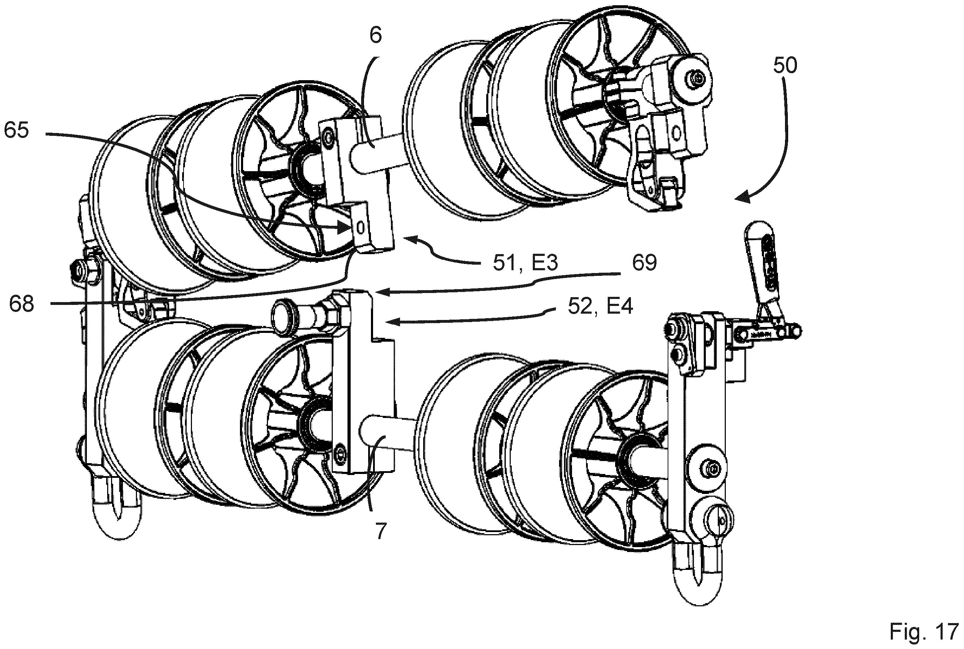

Figuren 14 bis 20 zeigen weitere Ausführungsbeispiele des Rollenblocks 1 schematisch in unterschiedlichen Ansichten. Für Elemente, deren Form und/oder Funktion Elementen der vorherigen Ausführungsbeispiele entsprechen, sind dieselben Bezugszeichen verwendet. Der Kürze halber ist im Folgenden lediglich auf die Unterschiede zu den vorherigen Ausführungsbeispielen eingegangen.

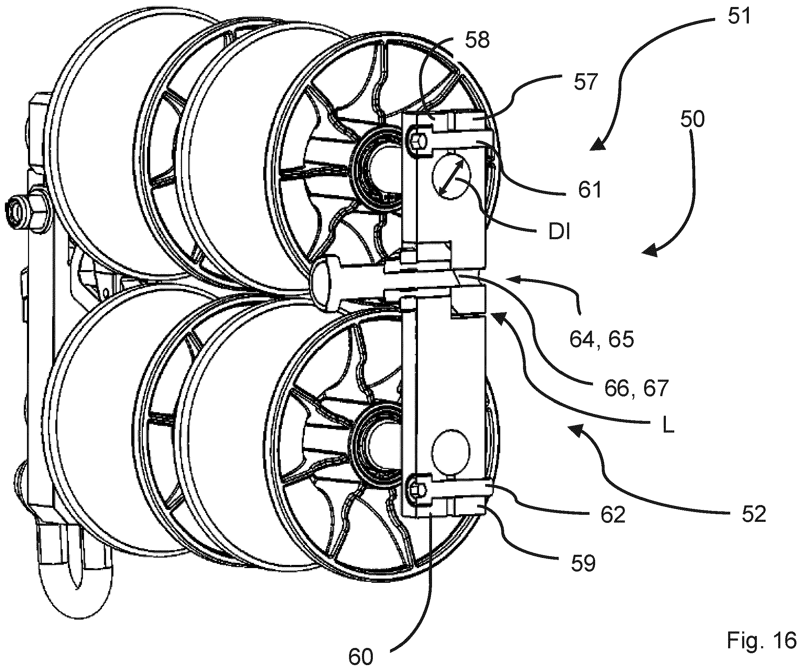

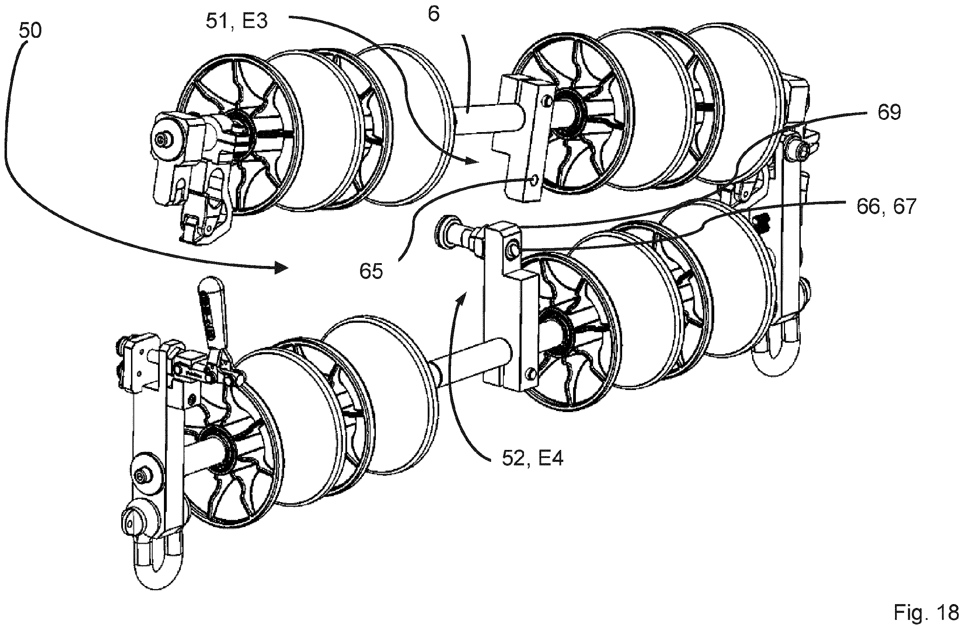

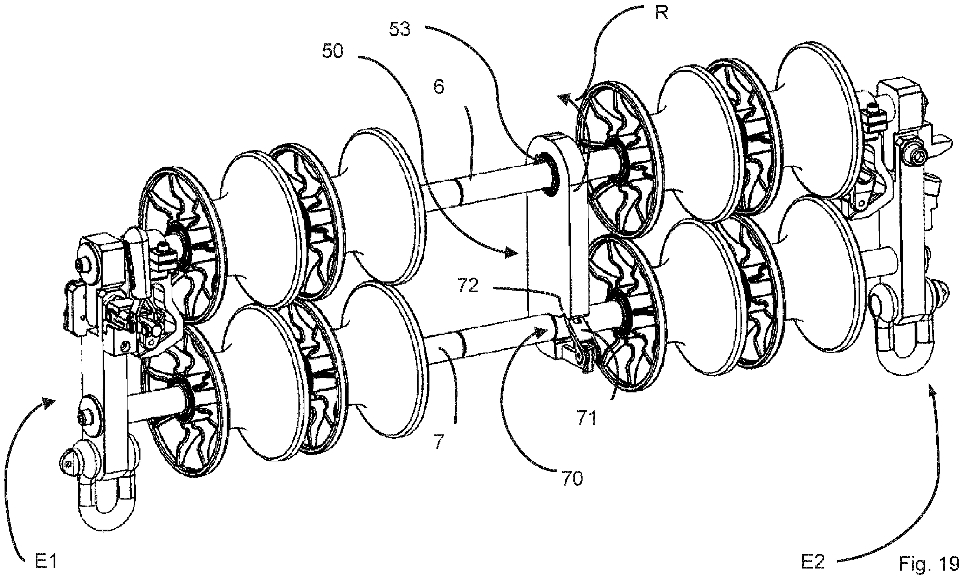

Figuren 14 bis 18 zeigen den Rollenblock 1 mit einer optionalen Haltevorrichtung 50 in einem zugeschwenkten oder geschlossenen Zustand. Figuren 14, 15, 17 und 18 zeigen den Rollenblock 1 perspektivisch in schematischen Ansichten. In Figur 16 ist der Rollenblock schematisch in einer Schnittansicht dargestellt. Figuren 18 und 19 zeigen den Rollenblock 1 mit der optionalen Haltevorrichtung 50 in einem wenigstens teilweise aufgeschwenkten Zustand.

In einem in den Figuren 14 bis 16 dargestellten geschlossenen Zustand des Rollenblocks 1 kann die Haltevorrichtung 50 die erste Rollachse 6 mit der zweiten Rollachse 7 Kraft übertragend verbinden. Dabei kann die Haltevorrichtung 50 zwischen dem ersten Ende E1 und dem zweiten Ende E2 angeordnet sein.

Beispielsweise kann die Haltevorrichtung 50 ein Band, etwa ein Textil- oder Gewebeband, sein. Das Band kann verstärkt sein, zum Beispiel mit einem Kunststoff oder mit Glasfasern.

Der Kunststoff kann kohlenstoffverstärkt oder glasfaserverstärkt sein oder Aramidfasern, etwa Kevlar, aufweisen oder daraus bestehen.

Im Ausführungsbeispiel der Figur 14 ist die Haltevorrichtung 50 jedoch nicht wie ein Band verformbar, sondern starr ausgebildet. So kann die Haltevorrichtung 50 ein Metall oder eine Metalllegierung aufweisen oder daraus bestehen. Beispielsweise ist die Haltevorrichtung 50 aus Stahl geformt.

Die Haltevorrichtung 50 kann bis zu zwei oder mehr Halteabschnitte 51, 52 aufweisen, die jeweils an einer der beiden Rollachsen 6, 7 Kraft aufnehmend oder ableitend befestigbar sind. Beispielsweise können die Halteabschnitte 51, 52 jeweils ein Durchgangsloch 53, 54 aufweisen, dessen Innendurchmesser DI im Wesentlichen dem Außendurchmesser einer der beiden Rollachsen 6, 7 entspricht. Der Innendurchmesser DI kann geringfügig und beispielsweise mehr als 0,1 mm und bis zu 0,5 mm oder sogar bis zu 1 mm oder sogar bis zu 2 mm größer sein als der Außendurchmesser, wodurch sich das Einführen der jeweiligen Rollachse 6, 7 in das Durchgangsloch 53, 54 vereinfachen kann.

Die Haltevorrichtung 50 kann ausgebildet sein, eine lichte Weite des Durchgangslochs 53, 54 und beispielsweise den Innendurchmesser DI zu verändern, um die Haltevorrichtung 50 unverschieblich an wenigstens einer der Rollachsen 6, 7 zu positionieren. Vorzugsweise ist die Haltevorrichtung 50 im Betrieb unverschiebbar mittig zwischen den Enden E1, E2 positioniert. Beispielsweise kann das Durchgangsloch 53, 54 einseitig an einen Verstellschlitz 55, 56 angrenzen und sich in diesen öffnen. Der Verstellschlitz 55, 56 kann zwischen zwei Seitenwangen 57, 58, 59, 60 des jeweiligen Halteabschnitts 51, 52 angeordnet sein. Die Seitenwangen 57, 58, 59, 60 können freie Enden des jeweiligen Halteabschnitts 51, 52 bilden. Die Seitenwangen 57, 58, 59, 60können quer zu einer Längsachse des Durchgangslochs 53, 54 mit dem Verstellschlitz 55, 56 dazwischen voneinander beabstandet sein. Werden die Seitenwangen 57, 58, 59, 60 des jeweiligen Halteabschnitts 51, 52 aufeinander zu bewegt, kann sich die lichte Weite oder der Innendurchmesser des Durchgangslochs 53, 54 verringern. Die Seitenwangen 57, 58, 59, 60 können beispielsweise mit einer Schraube 61, 62, die sich durch die Seitenwangen 57, 58, 59, 60 erstreckt, aufeinander zu gezogen werden. Alternativ oder zusätzlich zum Verstellschlitz 55, 56 und den Seitenwangen 57, 58, 59, 60 kann die Haltevorrichtung 50 mit einer Schraube versehen sein, die quer zur Längsachse des Durchgangslochs 53, 54 in dieses hinein und aus diesem heraus schraubbar ist, um die lichte Weite des Durchgangslochs 53. 54 zu verändern.

In allen Ausführungsbeispielen können die Rollachsen 6, 7 oder zumindest eine der Rollachsen 6, 7 so an der Verbindungsvorrichtung 8 angebracht sein, dass sich die Rollachsen 6, 7 nicht bezüglich der Verbindungsvorrichtung 8 rollen lassen. Beispielsweise können die Seillaufrollen 4a, 4b, 5a, 5b auf den Rollachsen 6, 7 rollen und zum Beispiel durch ein Kugellager an den Rollachsen 6, 7 gelagert sein.

Die Halteabschnitte 51, 52 können wie oben beschrieben, etwa kraft- oder reibschlüssig, unverschiebbar an der jeweiligen Rollachse 6, 7 angebracht oder zumindest anbringbar sein. Sind die Halteabschnitte 51, 52 unverschiebbar an der jeweiligen Rollachse 6, 7 angebracht, so können diese ebenfalls undrehbar um die jeweilige Rollachse 6, 7 und etwa bezüglich der Verbindungsvorrichtung 8 um die Rollachse 6, 7 herum unschwenkbar sein.

Sind die Halteabschnitte 51, 52 unschwenkbar an den Rollachsen 6, 7 angebracht, können diese so ausgerichtet sein, dass sie im geschlossenen Zustand des Rollenblocks 1 miteinander quer zu den Rollachsen 6, 7 fluchten. Sind die Halteabschnitte 51, 52 unschwenkbar an den Rollachsen 6, 7 angebracht, können die Halteabschnitte 51, 52 so ausgerichtet sein, dass sie auf die Rollachse 6,7, an der der jeweils andere Halteabschnitt 51, 52 angebracht ist, zu weisen.

Aufeinander zu weisende Enden E3, E4 der Halteabschnitte 51, 52 können im Wesentlichen komplementär zueinander und womöglich mit im geschlossenen Zustand ineinander greifenden Befestigungsstufen ausgebildet sein. Alternativ zu den Befestigungsstufen kann das Ende E3, E4 eines der Halteabschnitte 51, 52 zwei eine Halteaufnahme begrenzende Haltevorsprünge und das Ende E3, E4 des anderen der Halteabschnitte 51, 52 einen komplementär zur Halteaufnahme ausgeformten und im geschlossenen Zustand in diese eingreifenden weitere Haltevorsprung aufweisen.

Die Haltevorrichtung 50 kann ausgebildet sein, die Halteabschnitte 51, 52 im geschlossenen Zustand aneinander so zu befestigen, dass die Halteabschnitte 51, 52 gegen ein Bewegen voneinander weg beim Aufschwenken der Rollachsen 6, 7 gesichert sind. Beispielsweise kann die Haltevorrichtung 50 einen Haltestift 63 aufweisen, der sich im geschlossenen Zustand durch beide Halteabschnitte 51, 52 und insbesondere durch deren Enden E3, E4 erstreckt. Zumindest im geschlossenen Zustand kann sich der Haltestift 63 quer zu einer Längsachse zumindest eines der Durchgangslöcher 53, 54 erstrecken.

Die Halteabschnitte 51, 52 und insbesondere durch deren Enden E3, E4 können Haltetunnel 64, 65 aufweisen, die sich quer zu einer Längsachse der Durchgangslöcher 53, 54 des jeweiligen Halteabschnitts 51, 52 erstrecken. Im geschlossenen Zustand können die Haltetunnel 64, 65 miteinander fluchten, also einen durchgängigen Tunnel bilden, sodass der Haltestift 63 zumindest teilweise in beiden Haltetunneln 64, 65 gleichzeitig angeordnet sein kann.

Der Haltestift 63 kann unverlierbar an einem der Halteabschnitte 51, 52 angebracht sein. Der Haltestift 63 kann eine Freigabeposition aufweisen, in der sich der Haltestift 63 nur durch einen der Haltetunnel 64, 65 erstreckt. Der Haltestift 63 kann eine Halteposition aufweisen, in der der Haltestift 63 zumindest abschnittsweise gleichzeitig in beiden Haltetunneln 64, 65 angeordnet ist. Der Haltestift 63 kann elastisch in die Halteposition vorgespannt gelagert sein. Beispielsweise kann die Haltevorrichtung 50 eine Feder, etwa eine Spiralfeder, aufweisen, die den Haltestift 63 aus der Freigabeposition in die Halteposition vorspannt. Ist die Feder eine Spiralfeder, kann sich der Haltestift 63 wenigstens abschnittsweise durch die Spiralfeder erstrecken.

Der Haltestift 63 kann ein freies Halteende 66 aufweisen, wobei ein zum Halteende 66 führender Abschnitt des Haltestiftes 63 in der Halteposition in einem der Haltetunnel 64 und das Halteende 66 im anderen der Haltetunnel 65 angeordnet ist. Das Halteende 66 kann eine Stirnfläche 67 aufweisen, die schräg und beispielsweise unter einem Winkel zwischen 0 ° und 90 ° oder bis zu 80 °, bis zu 70 ° oder bis zu 60 ° zu einer Längsachse des Haltestiftes 63 verläuft. Sind die Halteabschnitte 51, 52 voneinander beabstandet, kann die Stirnfläche 67 zu dem Halteabschnitt 51, 52 weisen, an dem der Haltestift 63 nicht unverlierbar angebracht ist.

Ein dem Halteende 66 gegenüberliegendes Ende 68 des Haltestiftes 63 kann mit einem Griff versehen sein, der ein manuelles Ziehen des Haltestiftes 63 aus der Halteposition in die Freigabeposition entgegen der elastischen Federkraft erleichtert.

Zumindest eines der Enden E3, E4 der Halteabschnitte 51, 52 kann mit einer Führungsschräge 68, 69 versehen sein. Die jeweilige Führungsschräge 68, 69 kann an einem von der Rollachse 6, 7, an der der die Führungsschräge 68, 69 aufweisende Halteabschnitt 51, 52 angebracht ist, weg weisenden freien Ende des Halteabschnitts 51, 52 angebracht sein. Ist jeweils eine Führungsschräge 68, 69 an jedem der Halteabschnitte 51, 52 vorgesehen, können diese aufeinander zu weisen. Die zumindest eine Führungsschräge 68, 69 kann ein kollisionsfreies Zusammenführen der aufeinander zu weisenden Enden E3, E4 erleichtern. Ferner kann die Führungsschräge 68, die an dem den Haltetunnel 65 aufweisenden Halteabschnitt 51 vorgesehen ist, mit der Stirnfläche 67 des Haltestiftes 63 interagieren, um den Haltestift 63 aus der vorgespannten Halteposition in Richtung auf dessen Freigabeposition zu bewegen, wenn die Halteabschnitte 51, 52 in die geschlossene Position bewegt werden.

Das Durchgangsloch 53, 54 jedes der Halteabschnitte 51, 52 kann zwischen der Führungsschräge 68, 69 des Halteabschnitts 51, 52 und dessen Durchgangsloch 53, 54 angeordnet sein.

Die Enden E3, E4 können einen Rücksprung aufweisen, von denen sich ein Vorsprung von der Rollachse, an der der das Ende E3, E4 aufweisenden Halteabschnitt 51, 52 angebracht ist, weg vorspringt. Einer der Vorsprünge kann kürzer sein als der andere der Vorsprünge, sodass eine Lücke L zwischen dem Vorsprung und dem anderen Halteabschnitt 52 verbleibt, wenn die Halteabschnitte 51, 52 im geschlossenen Zustand aneinander anliegen oder wenn die Haltetunnel 64, 65 im geschlossenen Zustand miteinander fluchten.

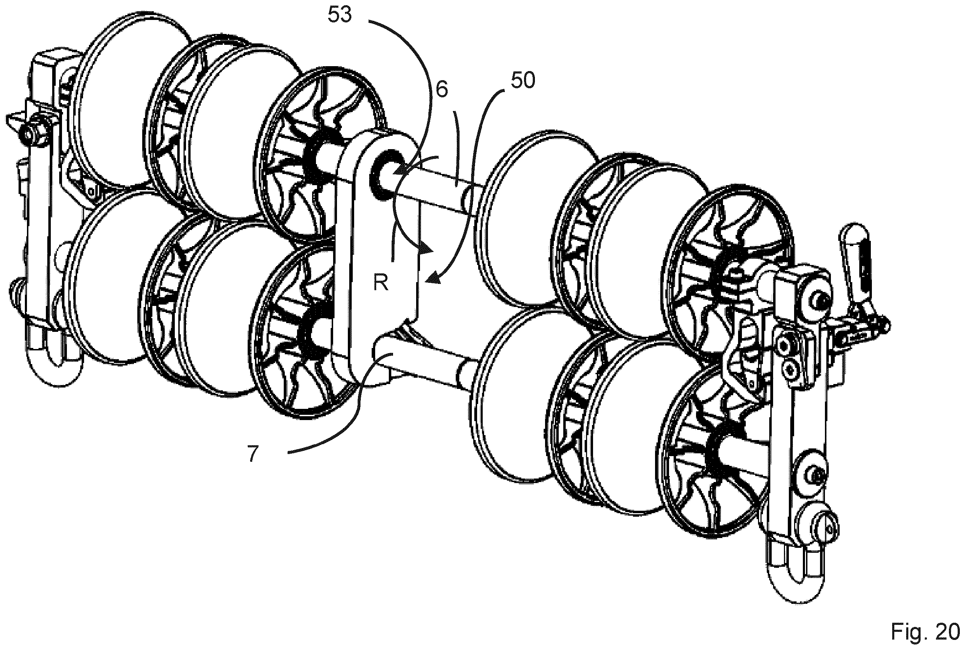

Figuren 19 und 20 zeigen den Rollenblock 1 mit einem weiteren Ausführungsbeispiel der Haltevorrichtung 50. Für Elemente, die in Form und/oder Funktion Elementen der vorherigen Ausführungsbeispiele entsprechen, sind dieselben Bezugszeichen verwendet. Der Kürze halber ist im Folgenden lediglich auf die Unterschiede zu den vorherigen Ausführungsbeispielen eingegangen.

Die Haltevorrichtung 50 kann ein Durchgangsloch 53 aufweisen, durch das sich eine der Rollachsen 6, 7 erstrecken kann. Die Haltevorrichtung 50 kann um die Rollachse 6, 7, die sich durch das Durchgangsloch 53 erstreckt, schwenkbar und beispielsweise mittels eines Kugellagers an der sich durch das Durchgangsloch 53 erstreckenden Rollachse 6, 7 gelagert sein. Die Haltevorrichtung 50 kann in einer die Rollachse 6, 7 umlaufenden Schwenkrichtung R schwenkbar sein. Die Haltevorrichtung 50 kann an der sich durch das Durchgangsloch 53 erstreckenden Rollachse 6, 7 unverschiebbar angebracht sein, beispielsweise mittig zwischen den Enden E1, E2. Beispielsweise kann die Haltevorrichtung 50 auf die Rollachse 6, 7 aufgepresst und von Sicherungsringen flankiert positionsgesichert sein.

Anstelle eines Durchgangslochs 54 kann die Haltevorrichtung 50 des Ausführungsbeispiels der Figuren 19 und 20 mit einer Haltebucht 70 versehen sein. Die Haltebucht 70 kann sich in der Schwenkrichtung R öffnen. Die Öffnung kann durch eine elastisch vorgespannte Klappe 71 geschlossen sein, um eine ungewollte Entnahme einer in der Haltebucht 70 angeordneten Rollachse 7 zu verhindern. Die Klappe 71 kann gegen eine Innenseite der Haltebucht 70 vorgespannt sein. Die Innenseite kann eine von der Haltebucht 70 weg vorspringende Aufnahmevertiefung 72 zur Aufnahme eines freien Endes der Klappe 71 aufweisen. In der geschlossenen Position der Klappe 71 kann deren freies Ende in der Aufnahmevertiefung 72 angeordnet sein. Die Aufnahmevertiefung 72 kann eine Anschlagfläche aufweisen, gegen das das freie Ende der Klappe 71 gedrückt ist, wenn die Klappe 71 in ihrer die Haltebucht 70 verschließenden Position angeordnet ist. Die Anschlagfläche kann einem Boden der womöglich U-förmigen Haltebucht 70 zugewandt sein.

Jede der Haltevorrichtungen 50 der beiden Ausführungsbeispiele kann jedem Rollenblock 1 der vorherigen Ausführungsbeispiele hinzugefügt werden. Die Haltevorrichtungen 50 können insbesondere unabhängig von der Anzahl der Seillaufrollenpaare jedem Rollenblock 1 der vorherigen Ausführungsbeispiele hinzugefügt werden. Weist der Rollenblock 1 genau eine Haltevorrichtung 50, so kann diese Mittig zwischen den Enden E1, E2 angeordnet sein. Alternativ oder zusätzlich dann die genau eine Haltevorrichtung 50 an dem Ort angeordnet sein, an dem sich eine der Rollachsen unter Last durch Leitungsseile im Einsatz des Rollenblocks 1 am meisten Durchbiegt. Weist der Rollenblock mehrere Haltevorrichtungen 50 auf, so können die Haltevorrichtungen 50 mit einem identischen Abstand zu benachbarten Seillaufpaaren angeordnet sein. Weist der Rollenblock mehrere Haltevorrichtungen 50 auf, so können alle der mehreren Haltevorrichtungen 50 den Haltevorrichtungen 50 des Ausführungsbeispiels der Figuren 14 bis 18 oder den Haltevorrichtungen 50 des Ausführungsbeispiels der Figuren 19 und 20 entsprechen. Weist der Rollenblock mehrere Haltevorrichtungen 50 auf, so kann wenigstens eine der mehreren Haltevorrichtungen 50 eine Haltevorrichtung 50 des Ausführungsbeispiels der Figuren 14 bis 18 und wenigstens eine andere der Haltevorrichtungen 50 eine Haltevorrichtung 50 des Ausführungsbeispiels der Figuren 19 und 20 sein.

### Bezugszeichenliste

- 1, 1a: Rollenblock
- 2: erstes Seillaufrollenpaar
- 2a, b: Seillaufrolle
- 3: zweites Seillaufrollenpaar
- 3a, b: Seillaufrolle
- 4: drittes Seillaufrollenpaar
- 4a, b: Seillaufrolle
- 5: viertes Seillaufrollenpaar
- 5a, b: Seillaufrolle
- 6: erste Rollachse
- 7: zweite Rollachse
- 8: Verbindungsvorrichtung
- 9: erster Flügel
- 10: zweiter Flügel
- 11: Schwenkachse
- 12, 15, 16: Befestigungsvorrichtung
- 13: Aussparung
- 14: Sperre
- 17: Verschlussvorrichtung
- 18: erste Anbringaufnahme
- 19: zweite Anbringaufnahme
- 20, 21: Anbringring
- 22, 23: Befestigungsvorsprung
- 24, 25: Verbindungselement
- 26, 27: Befestigungspunkt
- 28: Bedienhebel
- 30: Schubstange
- 31: freies Ende
- 32: weitere Anbringaufnahme
- 33: Anbringring
- 34: Befestigungsvorsprung
- 35: weitere Anbringaufnahme
- 36: Ende
- 37: Blockierelement
- 38: Rotationsachse
- 40: Langloch
- 41: Schwenkbegrenzungseinrichtung
- 42: erster Anschlag
- 43: zweiter Anschlag
- 44: elastisches Element
- 50: Haltevorrichtung
- 51, 52: Halteabschnitte
- 53, 54: Durchgangsloch
- 55, 56: Verstellschlitz
- 57, 58, 59, 60: Seitenwangen
- 61, 62: Schraube
- 63: Haltestift
- 64, 65: Haltetunnel
- 66: Halteende
- 67: Stirnfläche
- 70: Haltebucht
- 71: Klappe
- 72: Aufnahmevertiefung

- A: aufgeschwenkter Zustand
- DI: Innendurchmesser
- E1: erstes Ende
- E2: zweites Ende
- E3, E4: aufeinander zu weisende Enden
- L: Lücke
- R: Schwenkrichtung
- S: sichernder Zustand
- V: verschlossener Zustand
- Z: zusammengeklappter Zustand

## Patentansprüche

1. Rollenblock (1), mit
einer ersten Rollachse (6) und einer von der ersten Rollachse (6) beanstandet angeordneten zweiten Rollachse (7), wobei der Rollenblock (1) entlang zumindest einer der ersten und der zweiten Rollenachsen (6, 7) ein erstes Ende (E1) und ein dem ersten Ende (E1) entlang zumindest einer der ersten und der zweiten Rollenachsen (6, 7) gegenüberliegendes zweites Ende (E2) aufweist,
einem ersten Paar (2) von Seillaufrollen und einem zweiten Paar (3) von Seillaufrollen, wobei
das erste Paar (2) zwei einander gegenüberliegend anordenbare Seillaufrollen aufweist und das zweite Paar (3) zwei weitere einander gegenüberliegend anordenbare Seillaufrollen aufweist, wobei
eine erste Seillaufrolle (2a) des ersten Paares (2) auf der ersten Rollachse (6) angeordnet ist und eine zweite Seillaufrolle (2b) des ersten Paares (2) auf der zweiten Rollachse (7) angeordnet ist, und wobei
eine erste Seillaufrolle (3a) des zweiten Paares (3) auf der ersten Rollachse (6) angeordnet ist und eine zweite Seillaufrolle (3b) des zweiten Paares (3) auf der zweiten Rollachse (7) angeordnet ist,
**dadurch gekennzeichnet, dass**
der Rollenblock (1) eine Verbindungsvorrichtung (8) aufweist, wobei die Verbindungsvorrichtung (8) die erste Rollenachse (6) und die zweite Rollenachse (7) unverlierbar miteinander und relativ zueinander schwenkbar verbindet.

2. Rollenblock (1) nach Anspruch 1, wobei der Rollenblock (1) eine Schwenkachse (11) aufweist, die näher an einer der ersten und zweiten Rollachsen (6, 7) angeordnet ist als an der anderen der ersten und zweiten Rollachsen (6, 7).

3. Rollenblock (1) nach Anspruch 2, wobei die Verbindungsvorrichtung (8) scharnierförmig mit zwei Flügeln (9, 10) und der die Flügel (9, 10) miteinander verbindenden Schwenkachse (11) ausgebildet ist, und wobei die erste Rollachse (6) an einem ersten der Flügel (9) und die zweite Rollachse (7) an einem zweiten der Flügel (10) angebracht ist.

4. Rollenblock (1) nach Anspruch 2 oder 3, wobei einer der beiden Flügel (9, 10) kürzer ist als der andere der beiden Flügel (9, 10).

5. Rollenblock (1) nach Anspruch 4, wobei der kürzere der beiden Flügel (9) eine erste Anbringaufnahme (18) aufweist und der längere der beiden Flügel (10) eine zweite Anbringaufnahme (19) und eine Verbindungseinrichtung aufweist, wobei eine der ersten und zweiten Rollachsen (6) an der ersten Anbringaufnahme (18) und die andere der ersten und zweiten Rollachsen (7) an der zweiten Anbringaufnahme (19) angebracht ist.

6. Rollenblock (1) nach Anspruch 5, wobei zumindest eine der Anbringaufnahmen (18, 19) einen Anbringring (20, 21), in den eine der ersten und zweiten Rollachsen (6, 7) hinein ragt, und einen vom Anbringring (20, 21) weg vorspringenden Befestigungsvorsprung (22, 23) aufweist.

7. Rollenblock (1) nach Anspruch 6, wobei einander gegenüberliegende Seiten des Befestigungsvorsprungs (22, 23) zwischen zwei Verbindungselementen (24, 25) der Verbindungseinrichtung angeordnet sind.

8. Rollenblock (1) nach Anspruch 6, 7, wobei sich die Schwenkachse (11) durch die Verbindungseinrichtung und den Befestigungsvorsprung (22, 23) erstreckt.

9. Rollenblock (1) nach einem der Ansprüche 1 bis 8, wobei die Verbindungsvorrichtung (8) am ersten Ende (E1) angeordnet ist.

10. Rollenblock (1) nach Anspruch 9, wobei der Rollenblock (1) am zweiten Ende (E2) mit einer auch wiederholt öffenbaren und verschließbaren Verschlussvorrichtung (17) versehen ist, wobei die Verschlussvorrichtung (17) in ihrem verschlossenen Zustand ein Schwenken der ersten und zweiten Rollachsen (6, 7) relativ zueinander verhindert und in ihrem geöffneten Zustand ein Schwenken der ersten und zweiten Rollachsen (6, 7) relativ zueinander freigibt.

11. Rollenblock (1) nach einem der Ansprüche 1 bis 10, wobei zumindest eine der ersten Seilrollen (2a, 3a, 4a, 5a) auf der ersten Rollachse (6) verschiebbar angeordnet ist und/oder zumindest eine der zweiten Seilrollen (2b, 3b, 4b, 5b) auf der zweiten Rollachse (7) verschiebbar angeordnet ist.

12. Rollenblock (1) nach einem der Ansprüche 1 bis 11, wobei der Rollenblock (1) eine Befestigungsvorrichtung (12) zur bewegungsübertragenden Befestigung des Rollenblocks (1) an einem Tragseil aufweist, wobei die Befestigungsvorrichtung (12) an einer der ersten und zweiten Rollachsen (6, 7) angebracht ist.

13. Rollenblock (1) nach einem der Ansprüche 1 bis 11, wobei der Rollenblock (1) zwei Befestigungsvorrichtungen (12, 15) zur bewegungsübertragenden Befestigung des Rollenblocks (1) an zwei Tragseilen aufweist, wobei die Befestigungsvorrichtungen (12, 15) das erste und das zweite Paar (2, 3) flankieren.

14. Rollenblock (1) nach Anspruch13, wobei eine erste der beiden Befestigungsvorrichtungen (12) an einer der ersten und zweiten Rollachsen (6, 7) angebracht ist und/oder eine zweite der beiden Befestigungsvorrichtungen (15) an einer der ersten und zweiten Rollachsen (6, 7) angebracht ist.

15. Rollenblock (1) nach einem der Ansprüche 1 bis 11, wobei der Rollenblock (1) ein drittes Paar (4) von Seillaufrollen und ein viertes Paar (5) von Seillaufrollen aufweist, wobei
das dritte Paar (4) zwei einander gegenüberliegend anordenbare Seillaufrollen aufweist und das vierte Paar (5) zwei weitere einander gegenüberliegend anordenbare Seillaufrollen aufweist, wobei
eine erste Seillaufrolle (4a) des dritten Paares (4) auf der ersten Rollachse (6) angeordnet ist und eine zweite Seillaufrolle (4b) des dritten Paares (4) auf der zweiten Rollachse (7) angeordnet ist, und wobei
eine erste Seillaufrolle (5a) des vierten Paares (5) auf der ersten Rollachse (6) angeordnet ist und eine zweite Seillaufrolle (5b) des vierten Paares (5) auf der zweiten Rollachse (7) angeordnet ist, und wobei
der Rollenblock (7) drei Befestigungsvorrichtungen (12, 15, 16) zur bewegungsübertragenden Befestigung des Rollenblocks (1) an drei Tragseilen aufweist, wobei zwei der Befestigungsvorrichtungen (12, 15) alle Paare (2, 3, 4, 5) flankieren und die dritte der Befestigungsvorrichtungen (16) zwischen zweien der Paare (3, 4) angeordnet ist.

16. Rollenblock (1) nach einem der Ansprüche 1 bis 15, wobei der Rollenblock (1) eine Haltevorrichtung (50), die in einem zugeschwenkten Zustand des Rollenblocks (1) die erste Rollachse (6) mit der zweiten Rollachse (7) Kraft übertragend verbindet, aufweist, wobei die Haltevorrichtung (50) zwischen dem ersten Ende (E1) und dem zweiten Ende (E2) angeordnet ist.
